(19) Europäisches Patentamt
European Patent Office
Office européen des brevets

(11) **EP 2 629 191 B1**

(12) **EUROPEAN PATENT SPECIFICATION**

(45) Date of publication and mention
of the grant of the patent:
**02.01.2019 Bulletin 2019/01**

(51) Int Cl.:
*G06F 3/06* *(2006.01)*      *H04L 12/40* *(2006.01)*
*H04L 12/64* *(2006.01)*      *B60K 35/00* *(2006.01)*
*G11B 27/00* *(2006.01)*      *H04N 5/775* *(2006.01)*
*H04N 7/10* *(2006.01)*       *H04N 19/44* *(2014.01)*
*H04N 7/173* *(2011.01)*      *G11B 20/10* *(2006.01)*
*G11B 20/00* *(2006.01)*

(21) Application number: **13168270.0**

(22) Date of filing: **17.11.2006**

(54) **Apparatus and method for interfacing between A/V system and portable device**

Verfahren und Vorrichtung zur Verbindung zwischen einem A/V-System und einem tragbaren Gerät

Appareil et procédé d'interfaçage entre un système A/V et un dispositif portable

(84) Designated Contracting States:
**DE FR GB IT NL**

(30) Priority: **25.11.2005   KR 20050113491**
**25.11.2005   KR 20050113492**
**01.06.2006   KR 20060049566**

(43) Date of publication of application:
**21.08.2013   Bulletin 2013/34**

(60) Divisional application:
**17172434.7 / 3 239 830**
**18202351.5**

(62) Document number(s) of the earlier application(s) in
accordance with Art. 76 EPC:
**06124330.9 / 1 835 388**

(73) Proprietor: **Samsung Electronics Co., Ltd.**
**Gyeonggi-do 443-742 (KR)**

(72) Inventors:
• **Seo, Min-cheol**
**Gyeonggi-do (KR)**
• **Kang, Tai-ryong**
**Gyeonggi-do (KR)**

• **Song, Kyung-soon**
**Seoul (KR)**
• **Nam, You-jin**
**Gyeonggi-do (KR)**

(74) Representative: **Grünecker Patent- und**
**Rechtsanwälte**
**PartG mbB**
**Leopoldstraße 4**
**80802 München (DE)**

(56) References cited:
**WO-A-2005/090126     US-A1- 2003 153 993**

• **"Universal Serial Bus Specification Revision 2.0:**
**Chapter 4, architectural overview", UNIVERSAL**
**SERIAL BUS SPECIFICATION, XX, XX, 27 April**
**2000 (2000-04-27), pages 15-24, XP002333867,**
• **"Setting up SoundManager Support", , 1**
**February 2001 (2001-02-01), XP055157048,**
**Retrieved from the Internet:**
**URL:http://tascam.com/content/downloads/pr**
**oducts/314/soundmanager.pdf [retrieved on**
**2014-12-05]**

EP 2 629 191 B1

**Description**

The present invention relates to an apparatus and method for interfacing between an audio/visual (A/V) system and a portable device. More particularly, the present invention relates to an apparatus and method for interfacing between and A/V system and a digital data recording and/or reproducing apparatus for transmission and reception of a control signal and a digital stream therebetween.

The use of portable multimedia devices, such as MP3 players, has recently begun to increase. Accordingly, there is a need for a technology that is capable of reproducing a multimedia file which is stored in a portable device, on an A/V device, such as a personal computer (PC) and a car audio system, or a technology for controlling the portable device. A user may experience greater benefits if an audio signal of a portable device is listened through an amplifier (AUX) of a non-portable device or with a digital sound field (DSP) effect, or if a file stored on an MP3 player is reproduced and the operation is controlled through a car audio while the user drives a car. So far, there has been no technology capable of controlling the operation of a portable multimedia file recording and/or reproducing apparatus in an A/V system and a linking stream.

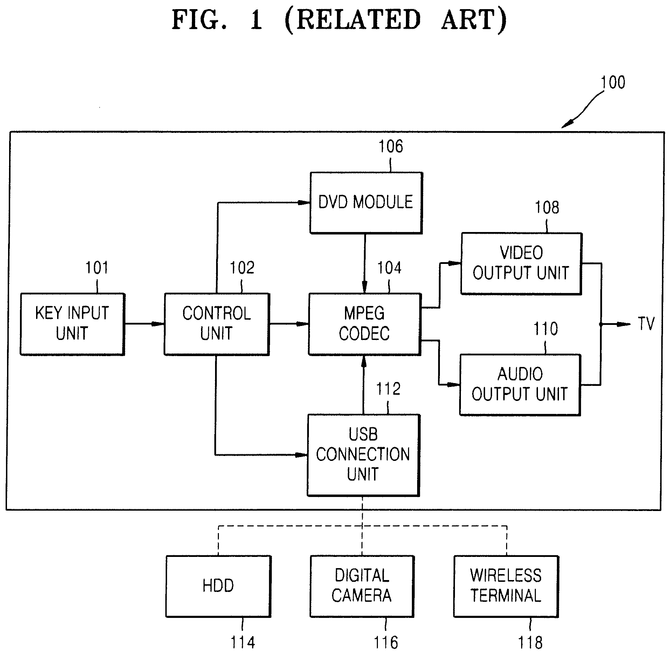

FIG. 1 is a block diagram illustrating an example in which conventional multimedia recording and/or reproducing devices 114 through 118 operating as universal serial bus (USB) portable devices are connected to an A/V system 100.

Referring to FIG. 1, the conventional A/V system 100 comprises a key input unit 101, a control unit 102, an MPEG codec 104, a DVD module 106, a video output unit 108, an audio output unit 110, and a USB connection unit 112. If multimedia recording and/or reproducing devices, such as a hard disk drive (HDD) 114, a digital camera 116, and a wireless terminal 118, are connected to the USB connection unit 112, these devices are recognized as portable storage devices, and the control unit 102 generates a list of files that can be reproduced, and outputs the list through the output unit 108 so that a user can recognize multimedia files that can be output.

If the user desires to have a specific file reproduced, the file is read from the device 114, 116 or 118, the file is decoded in the MPEG codec 104, and then, the decoded signal is transmitted to the video output unit 108 and the audio output unit 110.

Recently, a variety of multimedia content files have become available for purchase as content files. Many content files are sold and protected by digital rights management (DRM). Reproduction of the content to which the DRM technology is applied is limited so that only one device can reproduce the content. According to the conventional technology, a file bought to be reproduced in the devices 114 through 118 cannot be reproduced in the A/V system 100 even though the devices 114 through 118 are connected to the A/V system 100 through the USB connection unit 112.

The A/V system 100 should have a codec capable of decoding the formats to successfully support content files with a variety of formats. That is, in the case of a content file in a format that can be reproduced in the external devices 114 through 118 but cannot be supported by the MPEG codec unit 104, the content file cannot be reproduced in the A/V system 100.

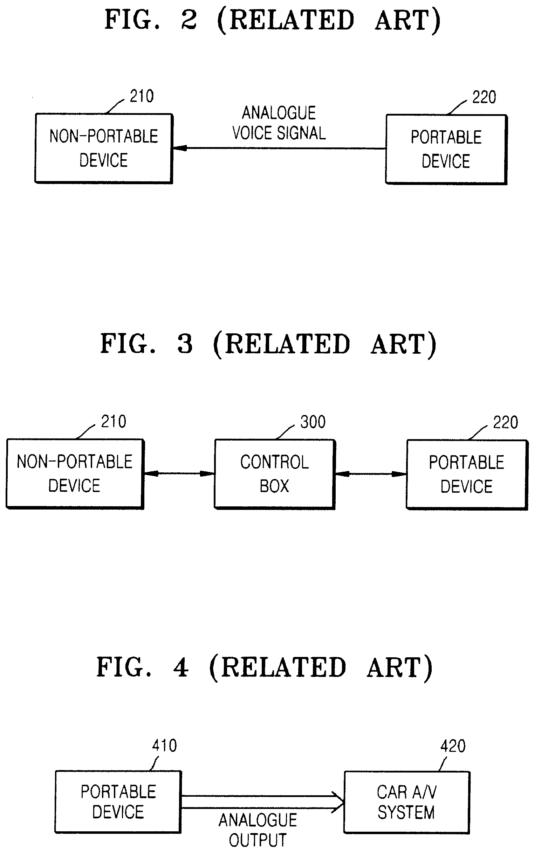

FIG. 2 is a block diagram illustrating data of a portable device 220 being reproduced in a non-portable device 210 according to a conventional technology.

Referring to FIG. 2, in order to listen to an audio signal of the portable device 220 through an amplifier or the DSP effect of the non-portable device 210, the analog output of the portable device 220 is connected to an amplifier (AUX) of the non-portable device 210. This configuration is inconvenient because the non-portable device 210 and the portable device 220 should be operated separately. Also, since only an analog audio signal can be transmitted from the portable device 220, the quality of sound is degraded.

FIG. 3 is a block diagram illustrating a portable device 220 that is controlled from a non-portable device 210 according to a conventional technology.

Referring to FIG. 3, in order to control the portable device 220, an operation command transmitted by the non-portable device 210 is converted in a separate control box 300 and transferred to the portable device 220. An RS232C connection between each module is used. However, this configuration has a drawback in that it requires a separate device.

FIG. 4 is a block diagram illustrating data of a portable device 410 being reproduced in a car audio/visual (A/V) system 420 according to a conventional technology.

This is a method extending the use of the conventional car A/V system, by reproducing a multimedia file stored in the portable device 410 in a car A/V system 420. This allows a user to experience greater benefits if multimedia data with a variety of formats is listened through an amplifier (AUX) or with a DSP effect of the car A/V system 420 that is a non-portable device, or if a file stored in an MP3 player is reproduced and the operation is controlled through the car A/V system while the user drives the car.

Referring to FIG. 4, an analog output of the portable device 410 is connected to an amplifier (AUX) of the car A/V system 420. This configuration is inconvenient because the car A/V system 420 and the portable device 410 should be operated separately. That is, when a file stored on an MP3 player is listened through a car audio system, volume is controlled through the car audio system, and song selection is inconveniently performed in the MP3 player. Furthermore, due to battery life restrictions of the portable device, it is impossible to use for an unrestricted period time.

Accordingly, there is a need for an improved system and method for interfacing between an audio/visual (A/V) system and a digital data recording and/or reproducing apparatus for transmission and reception of a control signal and a digital stream. US 2003/153993 (A1) relates to a head unit that outputs a control bus command in response to an input operation by a user. A conversion unit converts the control bus command into a USB data frame and outputs The USB data frame to a notebook personal computer. Based on the USB data frame, and notebook personal computer reads music data stored in a hard disk drive, and outputs the music data to the head unit via the conversion unit. If the music data is compressed, the music data is decoded at the notebook personal computer. Thus, a dedicated decoding LSI need not be provided in the head unit.

An aspect of exemplary embodiments of the present invention is to address at least the above problems and/or disadvantages and to provide at least the advantages described below. It is the object of the present invention to provide an apparatus and method for controlling an operation of a digital data recording and/or reproducing apparatus only by manipulation of an audio/visual (A/V) system without a need for additional equipment, and capable of reproducing a multimedia content file stored in the digital data recording and/or reproducing apparatus in the A/V system. This object is solved by the subject matter of the independent claims. Preferred embodiments are defined by the subject matter of the dependent claims.

An exemplary embodiment of the present invention also provides an apparatus and method for controlling a portable digital data recording and/or reproducing apparatus by using an unaltered conventional A/V system. According to an exemplary embodiment of the present invention, an apparatus and method facilitates the storage of data in the portable apparatus to be reproduced through an amplifier of the A/V system.

An exemplary embodiment of the present invention also provides an apparatus and method for reproducing a file of a digital data recording and/or reproducing apparatus in an A/V system irrespective of whether the A/V system supports a codec.

According to an exemplary embodiment of the present invention, an apparatus and method are provided to reproduce a file of a digital data recording and/or reproducing apparatus protected by a digital rights management (DRM) technology in an A/V system.

According to an aspect of an exemplary embodiment of the present invention, a digital data recording and/or reproducing apparatus for recording and/or reproducing digital data is provided. The apparatus comprises a storage unit, a decoder unit, an interface unit and a control unit. The storage unit stores digital data encoded in a predetermined format. The decoder unit decodes digital data stored in the storage unit. The interface unit transmits the decoded data to an external device and the control unit controls the storage unit, the decoder unit, and the interface unit.

The interface unit may include a universal serial bus (USB) device controller.

The control unit may control the decoder unit to decode the digital data in predetermined units according to a control signal from the external device, and the USB device controller may include a first bulk interface that sequentially transmits the data decoded in predetermined units.

The USB device controller may further include a second bulk interface to transmit/receive the control signal and control information including information on the digital data to/from the external device. Also, through the first bulk interface, the USB device controller may receive a control signal from the external device and transmit information on digital data requested by the external device.

The USB device controller may include an isochronous interface for transmission of the decoded data in response to a control signal from the external device. According to an exemplary implementation, the USB device controller may further include a bulk interface that transmits/receives the control signal and control information including the result of executing the control signal to/from the external device.

Also, USB device controller may receive a digital stream from the external device through the isochronous interface, and the control unit may encode the received digital stream and store the encoded digital stream in the storage unit.

If the digital data is encrypted data, the control unit may decrypt the encrypted data and then transmit the decrypted data to the external device. The control unit may transmit the decoded data to the external device by using an encryption method.

The apparatus may further include an input unit that receives an input of a device using method. If a command to use a conventional USB protocol is input through the input unit, the control unit may control the USB device controller so that the digital data recording and/or reproducing apparatus operates according to the conventional USB protocol.

The apparatus may further include a digital/analog (D/A) conversion unit to convert the decoded data into analog data. According to an exemplary implementation, the control unit may control transmission of data so that the decoded data is selectively transmitted to the D/A conversion unit or to the interface unit.

According to another aspect of an exemplary embodiment of the present invention, an audio/video (A/V) system is provided. The AV system comprises an interface unit, a D/A conversion unit and a control unit. The interface unit receives decoded data from an external device, the D/A conversion unit converts the received decoded data into analog data and the control unit controls the interface unit and the D/A conversion unit.

The interface unit may include a USB host controller.

When a multimedia file to be reproduced is to be received from an external device the control unit may determine a time interval required to receive a unit of decoded data from the external device and the number of units of decoded data that are required to be received by referring to information on the multimedia file. According to the determined time interval, the control unit may sequentially transmit a control signal requesting data, through the USB host controller, a number of times according to the number of units determined, and the USB host controller may include a first bulk interface to sequentially receive data in predetermined reception units.

According to an exemplary implementation, the USB host controller may further include a second bulk interface transmitting/receiving the control signal and control information on the multimedia file to/from the external deice.

The USB host controller may also transmit/receive the control signal and control information on the multimedia file to/from the external device through the first bulk interface.

The USB host controller may include an isochronous interface receiving the decoded data. According to an exemplary implementation, the USB host controller may further include a bulk interface transmitting/receiving the control signal and control information including the result of executing the control signal to/from the external device. Also, through the isochronous interface, the USB host controller may transmit a digital stream to be stored in the external device.

According to another aspect of an exemplary embodiment of the present invention, a method of reproducing a multimedia file stored in a multimedia file recording and/or reproducing apparatus through an external device is provided. A control signal is received from the external device, a requested multimedia file is decoded if the control signal is a reproduction command and the decoded data is transmitted to the external device.

According to another aspect of an exemplary embodiment of the present invention, a method of reproducing a multimedia file stored on an external device through an A/V system is provided. A control signal to the external device is transmitted to command the multimedia file to be reproduced. Decoded data is received from the external device in response to the control signal and the decoded data is converted into analog data and the analog data is output.

According to another aspect of an exemplary embodiment of the present invention, an interface apparatus between an A/V system and a portable device is provided. The apparatus comprises a first connection unit, a second connection unit and an interface processing unit. The first connection unit connects the portable device and the second connection unit connects the A/V system. The interface processing unit converts a data format of the first connection unit into a data format of the second connection unit or converts a data format of the second connection unit into a data format of the first connection unit.

The first connection unit may be a USB connection unit.

The second connection unit may be a first serial connection unit.

The interface processing unit may include a USB host controller, a serial controller, a microcontroller and a D/A conversion unit. The USB host controller controls data communication with the portable device through the USB connection unit. The serial controller controls data communication with the A/V system through the first serial connection unit and the microcontroller converts a control signal input from the serial controller into a USB command and outputs the USB command to the USB host controller. The microcontroller also converts reproduction information input from the USB host controller into data that complies with a protocol for connection to the A/V system, and outputs the converted data to the serial controller. The D/A conversion unit converts a digital data stream input through the USB host controller into analog data and outputs the analog data to the serial controller.

The apparatus may further include a conversion unit connected to a front end of the first serial connection unit and that converts a pin input of the A/V system to fit the pin arrangement of the first serial connection unit.

The apparatus may further include a bypass unit and an input unit. The bypass unit is directly connected to the first serial connection unit and a second serial connection unit. The input unit receives information on a device to be used, wherein if the device to be used that is input through the input unit is a CD changer, the microcontroller controls the bypass unit to facilitate data communication between the A/V system and the CD changer.

The USB host controller may comprise a bulk interface and an isochronous interface. The bulk interface transmits and receives the USB command and the reproduction information. The isochronous interface or a bulk interface receives the digital stream.

According to another aspect of an exemplary embodiment of the present invention, an interface method between an A/V system and a portable device is provided. A signal format of the A/V system is converted into a signal format of the portable device and the converted signal is then output. A signal format of the portable device is converted into a signal format of the A/V system and the converted signal is output.

According to another aspect of the present invention, an interface method between an A/V system and a portable device is provided. A control signal is received from the A/V system through a second connection unit. The control signal is then converted into a data format of a first connection unit and the converted signal is transmitted to the portable device through the first connection unit. A digital stream is received from the portable device through the first connection unit in response to the control signal. The received digital stream is converted into an analog signal and the analog signal is transmitted to the A/V system through the second connection unit.

EP 2 629 191 B1

Other objects, advantages and salient features of the invention will become apparent to those skilled in the art from the following detailed description, which, taken in conjunction with the annexed drawings, discloses exemplary embodiments of the invention.

FIG. 1 is a block diagram illustrating an example in which a conventional multimedia recording and/or reproducing device operating as a USB portable device is connected to an A/V system;

FIG. 2 is a block diagram illustrating data of a portable device being reproduced in a non-portable device according to a conventional technology;

FIG. 3 is a block diagram illustrating a portable device being controlled from a non-portable device according to a conventional technology;

FIG. 4 is a block diagram illustrating data of a portable device being reproduced in a car audio/visual (A/V) system according to a conventional technology;

FIG. 5 is a block diagram illustrating an example of controlling a digital data recording and/or reproducing apparatus in an A/V system according to an exemplary embodiment of the present invention;

FIG. 6 is a block diagram illustrating a digital data recording and/or reproducing apparatus according to an exemplary embodiment of the present invention;

FIG. 7 is a block diagram illustrating an A/V system according to an exemplary embodiment of the present invention;

FIG. 8 is a block diagram illustrating a universal serial bus (USB) interface being used to control a digital data recording and/or reproducing apparatus in an A/V system according to an exemplary embodiment of the present invention;

FIG. 9 is a block diagram illustrating detailed internal structures of the A/V system and the digital data recording and/or reproducing apparatus of FIG. 8 and data flow therein according to an exemplary embodiment of the present invention;

FIG. 10 is a block diagram illustrating an interface structure between a USB host and a USB device according to an exemplary embodiment of the present invention;

FIG. 11 is a block diagram illustrating an interface structure between a USB host and a USB device according to another exemplary embodiment of the present invention;

FIG. 12 is a block diagram illustrating a principle of reproducing a multimedia file through a USB interface as illustrated in FIG. 10 according to an exemplary embodiment of the present invention;

FIG. 13 is a flowchart illustrating a method of reproducing a multimedia file through an external device in a digital data recording and/or reproducing apparatus according to an exemplary embodiment of the present invention;

FIG. 14 is a flowchart illustrating a method of operating a digital data recording and/or reproducing apparatus as an apparatus according to an exemplary embodiment of the present invention or as an apparatus of a different type according to an external input;

FIG. 15 is a flowchart illustrating a method of reproducing a multimedia file of an external device in the A/V system of FIG. 12 according to an exemplary embodiment of the present invention;

FIG. 16 is a flowchart illustrating a method of reproducing a multimedia file of an external device in the A/V system of FIG. 12 according to another exemplary embodiment of the present invention;

FIG. 17 is a flowchart illustrating a method of executing an operation command of a digital data recording and/or reproducing apparatus by the A/V system of FIG. 12 according to an exemplary embodiment of the present invention;

FIG. 18 is a block diagram illustrating an interface apparatus used to control a digital data recording and/or reproducing apparatus from an A/V system according to an exemplary embodiment of the present invention;

FIG. 19 is a diagram illustrating a structure of an interface apparatus according to an exemplary embodiment of the present invention;

FIGS. 20 and 21 are diagrams illustrating pin arrangements of serial cables used in a car A/V system according to an exemplary embodiment of the present invention;

FIG. 22 is a diagram illustrating a detailed structure of the interface apparatus of FIG. 19 and a connection thereof to an A/V system and a portable device according to an exemplary embodiment of the present invention;

FIG. 23 is a flowchart illustrating an interface method according to an exemplary embodiment of the present invention;

FIG. 24 is a flowchart illustrating a method of connecting an A/V system and a device using an interface apparatus according to an exemplary embodiment of the present invention;

FIG. 25 is a flowchart illustrating a method of reproducing data of a portable device in an A/V system using an interface apparatus according to an exemplary embodiment of the present invention;

FIG. 26 illustrates a structure of a conventional MP3 reproducing apparatus and a file reproduction data path;

FIG. 27 illustrates a path through which an encrypted MP3 file from a personal computer (PC) is received in a conventional MP3 reproducing apparatus;

FIGS. 28A and 28B are diagrams illustrating a conventional encryption method;

FIG. 29 is a diagram illustrating a data path through which a file encrypted in a conventional MP3 reproducing apparatus is reproduced;

FIG. 30 is a diagram illustrating an example in which an MP3 reproducing apparatus is connected so that the apparatus operates as a conventional portable device;

FIG. 31 is a diagram illustrating a path for transferring a requested MP3 file in the arrangement of FIG. 30;

FIG. 32 is a diagram illustrating a structure of an MP3 reproducing apparatus connected to a USB host device and a path for reproducing a file according to an exemplary embodiment of the present invention;

FIG. 33 is a diagram illustrating a path for transferring a voice signal reproduced from an MP3 file in the arrangement of FIG. 32 according to an exemplary embodiment of the present invention;

FIG. 34 is a diagram illustrating a switching principle for switching a data transfer direction according to an exemplary embodiment of the present invention;

FIG. 35 is a view illustrating an example of data stored in a RAM in FIG. 33 according to an exemplary embodiment of the present invention; and

FIG. 36 is a view illustrating an example of analysis of data that is transmitted and received between devices when an interface method according to an exemplary embodiment of the present invention is implemented.

Throughout the drawings, the same drawing reference numerals will be understood to refer to the same elements, features and structures.

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope of the invention. Also, descriptions of well-known functions and constructions are omitted for clarity and conciseness.

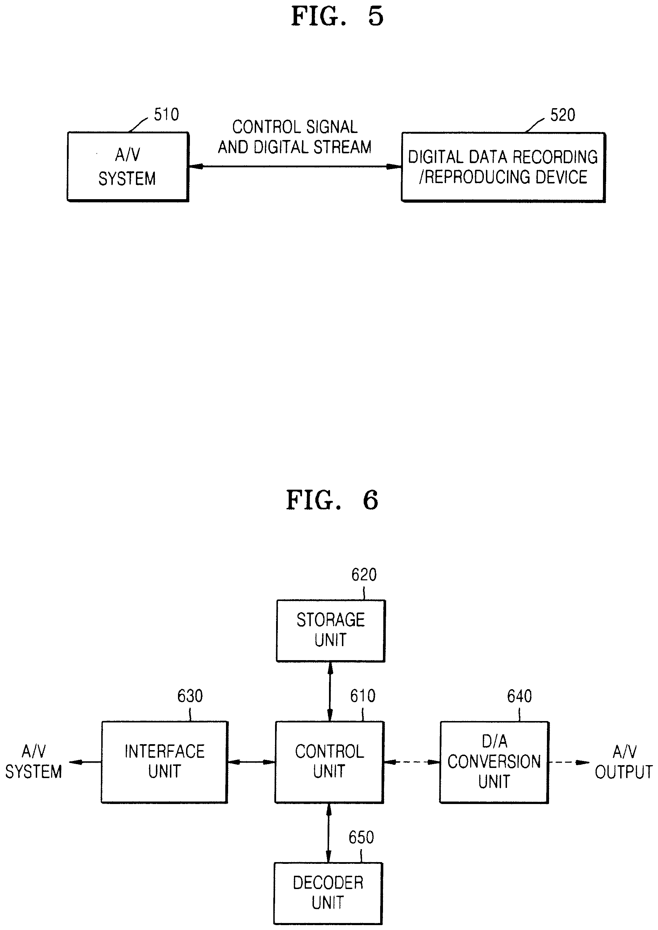

FIG. 5 is a block diagram illustrating an example of controlling a digital data recording and/or reproducing apparatus 520 in an A/V system 510 according to an exemplary embodiment of the present invention.

Referring to FIG. 5, transmission and reception of a control signal and a digital stream can be performed between the non-portable A/V system 510 and the portable digital data recording and/or reproducing apparatus 520 without adding a separate device.

FIG. 6 is a block diagram illustrating a digital data recording and/or reproducing apparatus according to an exemplary embodiment of the present invention.

Referring to FIG. 6, the digital data recording and/or reproducing apparatus, according to an exemplary embodiment of the present invention, comprises a storage unit 620, a decoder unit 650, an interface unit 630 and a control unit 610. The storage unit 620 stores digital data encoded in a predetermined format and the decoder unit 650 decodes the digital data stored in the storage unit 620. The interface unit 630 transmits the decoded data to an A/V system that is an external device, and transmits control information to and receives control information from the A/V system. The control unit 610 controls other modules. According to an exemplary implementation, a D/A conversion unit 640 that converts the decoded data and outputs the converted data may also be included. The apparatus reproduces digital data through the A/V system or through the D/A conversion unit 640 disposed in the apparatus according to a user's selection or according to a preset setting. Thus, the transmission direction of data is changed according to internal switching based on software. The interface unit 630 for communication with the A/V system is not limited to an interface supporting a predetermined protocol.

If digital data is in the form of an encrypted file to which a DRM technology or the like is applied, the control unit 610 decrypts the file and then decodes the decrypted file through the decoder unit 650. The control unit 610 may use an encryption method when transmitting the decoded file if the protection of the file must be maintained when the file is reproduced and then transmitted. At this time, the A/V system decrypts the received file and outputs the file.

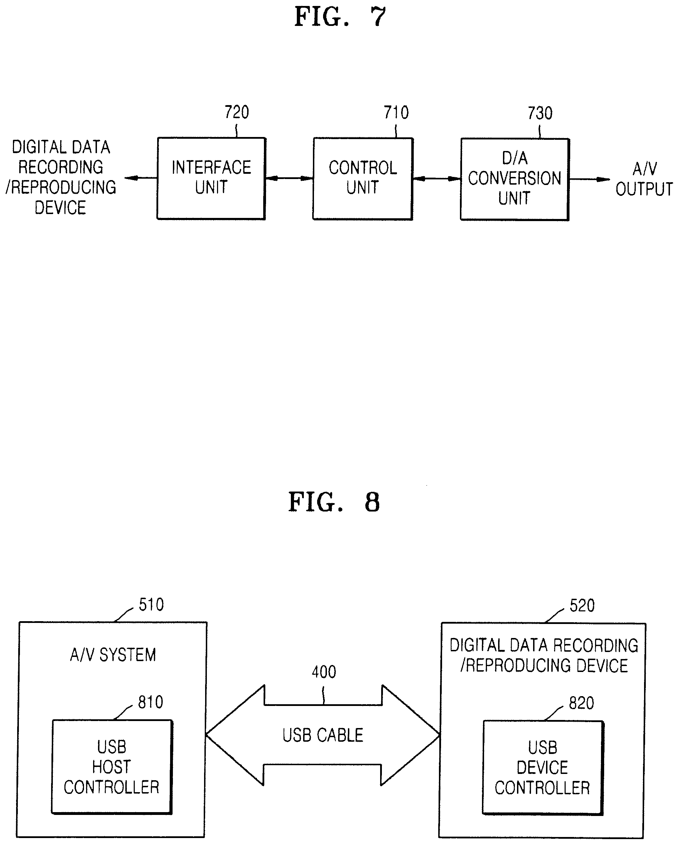

FIG. 7 is a block diagram illustrating an A/V system according to an exemplary embodiment of the present invention.

According to an exemplary embodiment of the present invention, the A/V system of FIG. 7 comprises an interface unit 720, a D/A conversion unit 730 and a control unit 710. The interface unit 720 receives a digital stream and receives/transmits control information from/to an external digital data recording and/or reproducing apparatus. The D/A conversion unit 730 converts the received decoded data into analog data and outputs the analog data. The control unit 710 controls the interface unit 720 and the D/A conversion unit 730. The interface unit 720 communicates with the digital data recording and/or reproducing apparatus and is not limited to an interface for a predetermined protocol.

FIG. 8 is a block diagram illustrating a universal serial bus (USB) interface used to control a digital data recording and/or reproducing device 520 in an A/V system 510 according to an exemplary embodiment of the present invention.

Referring to FIG. 8, the A/V system 510 and the digital data recording and/or reproducing device 520 are connected through a USB cable 400. The A/V system 510 has an embedded USB host controller 810 that supports a USB control interface according to an exemplary embodiment of the present invention. The digital data recording and/or reproducing device 520 has an embedded USB device controller 820 that supports a USB control interface according to an exemplary embodiment of the present invention.

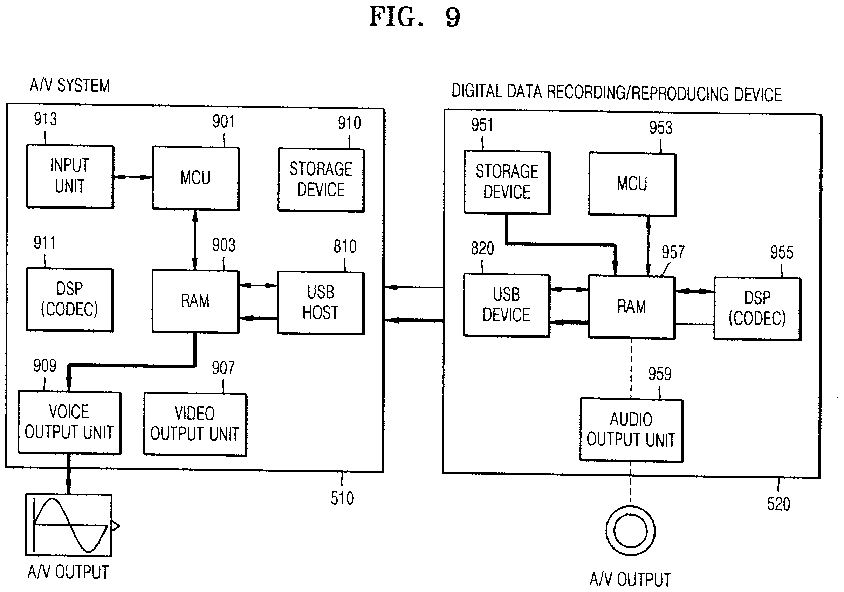

FIG. 9 is a block diagram illustrating detailed internal structures of the A/V system 510 and the digital data recording and/or reproducing apparatus 520 of FIG. 8 and data flow therein according to an exemplary embodiment of the present invention. FIG. 8 also illustrates an example of the digital data recording and/or reproducing apparatus 520 that is used as an apparatus for recording and reproducing an audio file according to an exemplary embodiment of the present invention. In FIG. 9, the data flow is indicated by thick arrows which illustrate a path of a digital stream. The data flow indicated by thin arrows illustrates a path of control information.

Referring to FIG. 9, the digital data recording and/or reproducing apparatus 520 receives a control signal, such as a reproduction command, from the A/V system 510 through the USB device controller 820. A microcontroller 953 (hereinafter referred to as an 'MCU') that is in charge of controlling the apparatus 520 reads digital data of which reproduction is requested, from a storage unit 951. The microcontroller 953 decodes the read file through a digital signal processor 955 (DSP, hereinafter referred to as a 'codec') that corresponds to a reproduction unit. The decoded data is loaded in a memory 957 (hereinafter referred to as a 'RAM'), and is transmitted to the A/V system 510 through the USB device controller 820. If the file is reproduced in the digital data recording and/or reproducing apparatus 520, the file is converted into an analog signal and output through an audio output unit 959.

Referring to FIG. 9, the A/V system 510 receives streaming data through the USB host controller 810 and loads the data in a RAM 903. An MCU 901 controls the A/V system 510 so that the received data is converted into an analog signal and output through a voice output unit 909. The A/V system 510 may be a car A/V system or a home A/V system, and may further include a storage device 901 and a codec 911. Also, the A/V system may further include an input unit 913 to receive input from a user. The user can select a multimedia file to be reproduced and send a reproduction command through the input unit 913. The A/V system 510 may also include a video output unit 907 to output a reproduction list or a reproduction state.

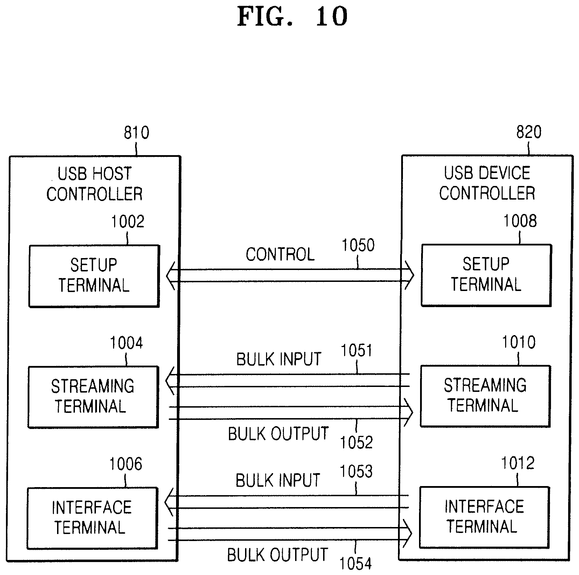

FIG. 10 is a block diagram illustrating an interface structure between a USB host controller 810 and a USB device controller 820 of FIGS. 8 and 9 according to an exemplary embodiment of the present invention. FIG. 10 illustrates a logical connection structure between the USB host controller 810 and the USB device controller 820. If a USB connection is established, the USB host 810 and the USB device 820 that are physical objects are connected to each other through 5 logical data pipes, as illustrated in FIG. 10. According to the exemplary embodiment of the present invention, these data pipes are connected between setup terminals 1002 and 1008, streaming terminals 1004 and 1010, and interface terminals 1006 and 1012. According to a USB standard, a data pipe between a USB host, such as the USB host controller 810, and a USB device, such as the USB device controller 820 for data transmission and reception, is referred to as an endpoint. According to an exemplary embodiment of the present invention, a control interface includes a control endpoint 1050, a first bulk interface includes a bulk input endpoint 1051 and/or a bulk output endpoint 1052, and a second bulk interface includes a bulk input endpoint 1053 and/or a bulk output endpoint 1054.

The control endpoint 1050 of FIG. 10 connects the setup terminals 1002 and 1008. The control endpoint 1050 is also a data pipe for transmitting and receiving information required to set the streaming terminals 1004 and 1010 and the interface terminals 1006 and 1012. If a USB cable is connected, the USB host 810 requests a standard descriptor of the USB device 820 through the control endpoint 1050. Then, the USB host 810 receives the descriptor on a configuration of endpoints as a response, from the USB device 820, and forms the remaining endpoints. In the exemplary embodiment of the present invention illustrated in FIG. 10, the endpoints set through the control endpoint 1050 are the bulk input endpoint 1051 and the bulk output endpoint 1052 of the streamlining terminals 1004 and 1010, and the bulk input endpoint 1053 and the bulk output endpoint 1054 of the interface terminals 1006 and 1012. According to an exemplary implementation, the directions of input and output are described as seen from the USB host 810.

The bulk input endpoint 1051 of the streaming terminals 1004 and 1010 is a data pipe for transmitting streaming data from the USB device 820 to the USB host 810, and for transferring an audio and/or video signal decoded in the digital data recording and/or reproducing apparatus 520. The bulk output endpoint 1052 is also used to transmit a synchronization signal. If the bulk output endpoint 1052 is used as an interface for downstreaming to the digital data recording and/or reproducing apparatus 520, it is also possible to implement a function to store multimedia data decoded in the A/V system 510 in the digital data recording and/or reproducing apparatus 520. For example, it is possible to transmit an output signal of a car audio system to an MP3 player to record the signal. In this case, the digital data recording and/or reproducing apparatus 520 encodes and stores the data transmitted through the bulk output endpoint 1052.

The interface terminals 1006 and 1012 are for transmission and reception of a control signal between the USB host 810 and the USB device 820. A control signal, such as a reproduction command, is transmitted through the bulk output endpoint 1054 to the USB device 820, and control information, such as information on a multimedia file, from the digital data recording and/or reproducing apparatus 520 is received through the bulk input endpoint 1053.

The first bulk interface 1051 and 1052 of the streaming terminals 1004 and 1010 and the second bulk interface 1052 and 1054 of the interface terminals 1006 and 1012 may be implemented as one interface. That is, only one bulk input endpoint and one bulk output endpoint can be set. Transmission and reception of both control information and streaming data can be performed through these endpoints. According to an exemplary implementation, information to distinguish the type of a data item may be inserted into data to be transmitted and received.

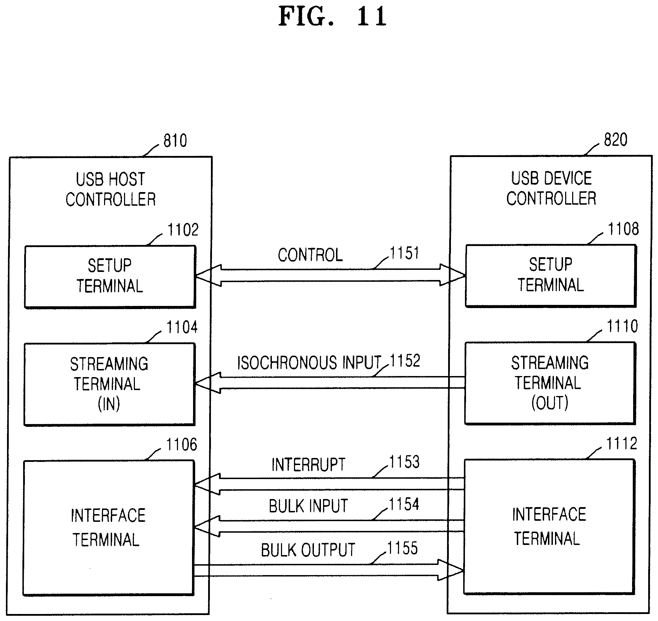

FIG. 11 is a block diagram illustrating an interface structure between a USB host and a USB device according to another exemplary embodiment of the present invention.

Similar to the exemplary embodiment of the present invention which is illustrated in FIG. 10, setup terminals 1102 and 1108 include a control endpoint 1151. The control endpoint 1151 is a data pipe for transmitting and receiving information required for a process of setting streaming terminals 1104 and 1110 and interface terminals 1106 and 1112. According to the exemplary embodiment of the present invention as illustrated in FIG. 11, interfaces set through the control endpoint 1151 are an isochronous interface comprising an isochronous input endpoint 1152 of the streamlining terminals 1104 and 1110, an interrupt interface formed with an interrupt endpoint 1153 of the interface terminals 1106 and 1112, and a bulk interface formed with a bulk input endpoint 1154 and a bulk output endpoint 1155.

The isochronous input endpoint 1152 of the streamlining terminals 1104 and 1110 is a data pipe for transmitting streaming data to a USB host controller 810 from a USB device controller 820, and for transferring an audio and/or video signal decoded in the digital data recording and/or reproducing apparatus 520. If an isochronous output endpoint for downstreaming to the USB device is further disposed, it is possible to implement a storage function in the digital data recording and/or reproducing apparatus 520. For example, it is possible to transmit an output signal of a car audio system to an MP3 player through the isochronous output endpoint to record the output signal.

The interface terminals 1106 and 1112 transmit and receive control information between the USB host 810 and the USB device 820. A control signal, such as a reproduction command, is transmitted to the USB device 820 through the bulk output endpoint 1155. Reproduction state information is transmitted to the digital data recording and/or reproducing apparatus 520 or state information is transmitted after performing other control signals is received through the bulk input endpoint 1154. The interrupt endpoint 1153 is a data pipe for transmitting time-related data that should be processed in a predetermined time, such as time information displayed during reproduction, and time-dependent data, such as lyric information, to the USB host 810. When necessary, the interrupt endpoint 1153 can be defined in an input direction or output direction and then used.

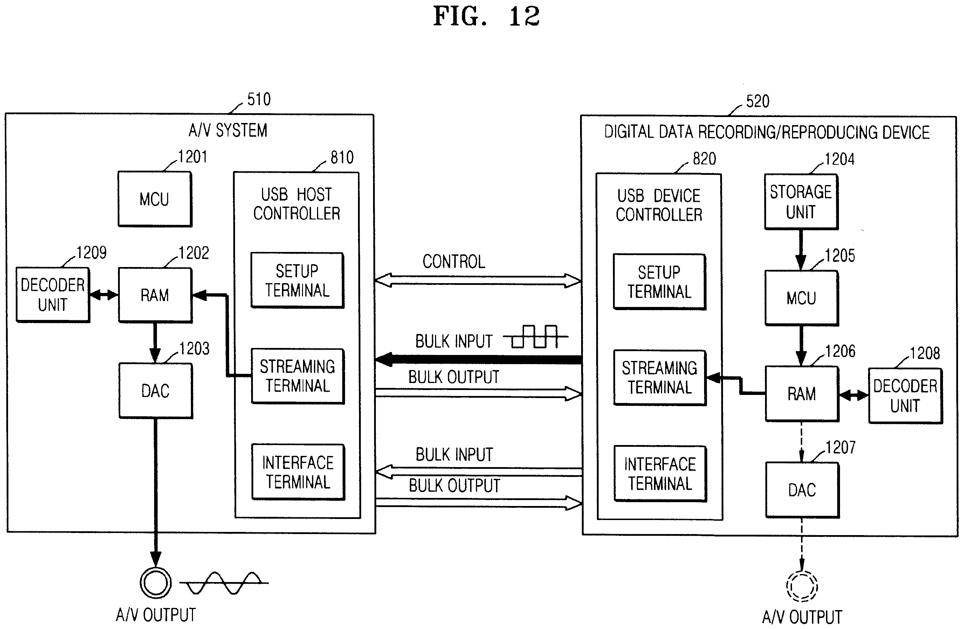

FIG. 12 is a block diagram illustrating a principle of reproducing a multimedia file through a USB interface built using the USB interface structure as illustrated in FIG. 10 according to an exemplary embodiment of the present invention. A moving path of streaming data for A/V data reproduction is indicated by black arrows.

Referring to FIG. 12, a digital data recording and/or reproducing apparatus 520 comprises a storage unit 1204, an MCU 1205, a RAM 1206, a D/A conversion unit (DAC) 1207, and a USB device controller 820. The storage unit 1204 is a storage device, such as a flash memory, and stores a multimedia file encoded in a predetermined format. The MCU 1205 that is a control unit reads digital data to be reproduced from the storage unit 1204, decodes the data through the decoder unit 1208, generates raw data, such as PCM and BMP data, and then, loads the data in the RAM 1206. In this process, a file that is encrypted according to DRM is decrypted before the decoding. The USB device controller 820 has logical data pipes, including a setup terminal, described above, and performs upstreaming of the raw data stored in the RAM 1206 through a bulk interface of a streaming terminal. If data loaded in the RAM 1206 is audio data, the data is transferred to the DAC 1207 and output when the data is reproduced in the digital data recording and/or reproducing apparatus 520. If the data is video data, the data is transferred to an LCD controller (not shown) and converted into analog data and then, output when the data is reproduced in the digital data recording an/or rep. However, when data is reproduced through the A/V system 510, upstreaming of the data to the A/V system 510 is performed through the USB control interface 810 and 820. The raw data mentioned in the exemplary embodiment of the present invention is not limited to data with predetermined formats, such as PCM and BMP, and can be generated in a variety of formats.

Referring to FIG. 12, the A/V system comprises an MCU 1201, a RAM 1202, a DAC 1203, a decoder unit (DSP) 1209, and a USB host controller 810. The USB host controller 810 receives streaming data from the digital data recording and/or reproducing apparatus 520 through a bulk interface of the streaming terminal and loads the data in the RAM 1202. If the loaded data is audio data, the DAC 1203 converts the data into analog data, and if the loaded data is video data, the LCD controller (not shown) converts the data into analog data, and then, the converted data is output.

Also, information on a file that is produced can be requested and received through a bulk interface of the interface terminal and can be output to a display (not shown) of the A/V system 510. Operation commands other than the reproduction command, and the results of executing the commands are also transmitted and received through a bulk interface of the interface terminal, and the result can be displayed if required.

Meanwhile, the bulk output endpoint of the streaming terminal can be used for downstreaming from the A/V system 510. The digital data recording and/or reproducing apparatus 520 encodes streaming data received through the bulk output endpoint and stores the data in the storage unit 1204.

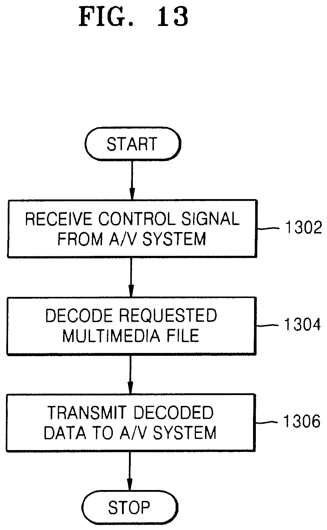

FIG. 13 is a flowchart illustrating a method of reproducing a multimedia file through an external device, where the multimedia file is stored in a digital data recording and/or reproducing apparatus, according to an exemplary embodiment of the present invention.

Referring to FIG. 13, a control signal from an external device (A/V system) is received in step 1302. If the received control signal is a reproduction command, the requested multimedia file is decoded in step 1304.

The decoded data is transmitted to the external device in step 1306.

Data communication with the external device can be performed through a USB device controller. The USB device controller, as described above, is built to include a first bulk interface or an isochronous interface for transmission and reception of a synchronization signal and data streaming, and a second bulk interface and/or an interrupt interface for transmitting and receiving control information. According to an exemplary implementation, an identical bulk interface may be used to transmit and receive control information and streaming data.

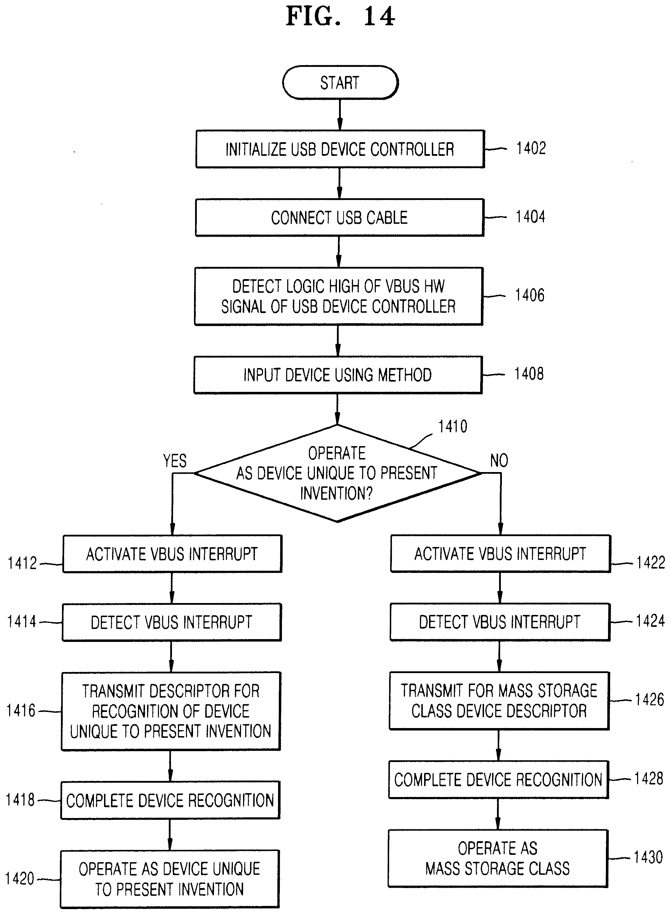

FIG. 14 is a flowchart illustrating a method of operating a digital data recording and/or reproducing apparatus as an apparatus according to an exemplary embodiment of the present invention or as an apparatus of a different type according to an external input.

Referring to FIG. 14, first, a USB controller is initialized in step 1402. A user connects a USB cable between an A/V system and a digital data recording and/or reproducing apparatus in step 1404. In step 1406, if a VBUS HW signal of the USB controller is detected to be logic high, the digital data recording and/or reproducing apparatus recognizes that the USB device controller is connected to a USB host controller. In step 1408, the digital data recording and/or reproducing apparatus provides an interface for the user to input a device using method. This interface facilitates the user's selection of whether the digital recording and/or reproducing apparatus operates using a conventional standardized USB protocol, or operates as a device unique to the present invention. For example, the user can select whether the apparatus is used as a conventional portable device or the apparatus is used to transmit DRM-decrypted raw data in a predetermined format according to the present invention. If the user inputs a device using method in step 1408, a determination of whether to operate as the device unique to the present invention in step 1410 is made. In the method of selecting an operation type, the user may use buttons or may input an operation type through a GUI, such as a menu screen. The operation type can be configured to automatically change when the apparatus is connected.

In order to operate as the device unique to the present invention, a predetermined protocol suitable for transmission of raw data that is not a conventional USB protocol is needed. In an A/V system, the protocol can be updated through a recording medium, such as a CD or a portable memory. When a change to the operation type is required, the protocol file can be uploaded from the ROM or storage medium to change the protocol after the protocol has been stored in a ROM of a portable device or a storage medium.

When the digital data recording and/or reproducing apparatus is operating as the device unique to the present invention, a VBUS interrupt is activated in step 1412, the VBUS interrupt is detected in step 1414, and descriptor information for recognition of the device unique to the present invention is transmitted to the setup terminal of the USB host controller through a control endpoint in step 1416. The USB host controller performs an enumeration procedure forming endpoints for transmission and reception of data and completes recognition of the device in step 1418. As a result of the recognition, a USB interface, as illustrated in FIG. 11 or 12, is formed and preparation for communication is finished. From this point, the digital data recording and/or reproducing apparatus operates as the device unique to the present invention, not as a portable device, such that a multimedia file can be reproduced through the A/V system in step 1420.

When the digital data recording and/or reproducing apparatus operates as a portable device according to Mass Storage Class, a VBUS interrupt is activated in step 1422, the VBUS interrupt is detected in step 1424, descriptor information for recognition of the portable device is transmitted in step 1426, and the recognition of the device is completed in step 1428. As a result of the recognition, a USB interface to use the apparatus as the portable device is formed and preparation for communication is finished. From this point, the digital data recording and/or reproducing apparatus operates as a portable device in step 1430.

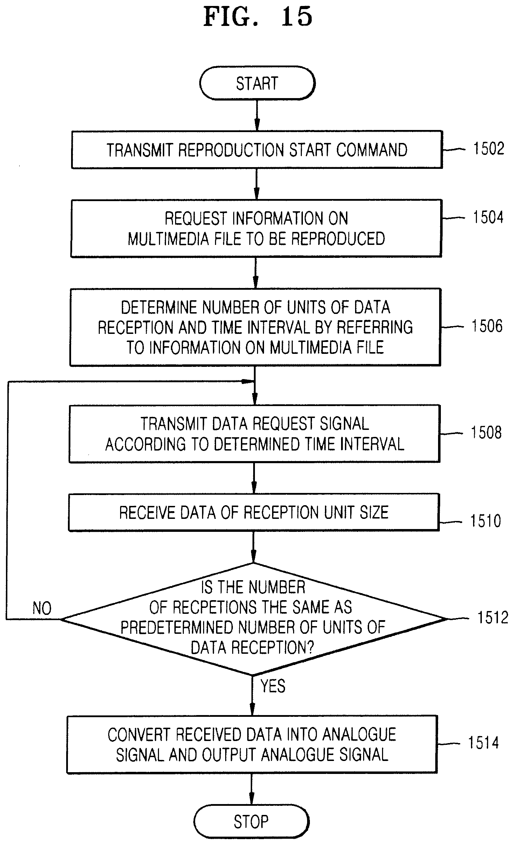

FIG. 15 is a flowchart illustrating a method of reproducing a multimedia file of the external device 520 in the A/V system 510 of FIG. 12 according to an exemplary embodiment of the present invention.

Referring to FIG. 15, the A/V system 510 transmits a control signal to control a digital data recording and/or reproducing apparatus 510 through a first or second bulk interface. The transmitted control signal is transferred to an MCU through a USB device controller and a RAM. If a reproduction start command is transmitted to the digital data recording and/or reproducing apparatus 520 in step 1502, the digital data recording and/or reproducing apparatus 520 is in a state in which the digital data recording and/or reproducing apparatus can reproduce a file.

If the A/V system 510 requests information on a multimedia file which is desired to be reproduced, through the first or second bulk interface in step 1504, the digital data recording and/or reproducing apparatus 520 transmits information on the multimedia file through the first or second bulk interface as a response. By referring to the received file information, the A/V system 510 determines the number of units of data reception, a reception unit, and a time interval in step 1506. According to the determined time interval, the A/V system 510 transmits a control signal requesting data to the digital data recording and/or reproducing apparatus 520 in step 1508.

For example, if the file to be received and reproduced is an MP3 file, the size of PCM data of 1 frame is 4608 bytes and a reproduction interval is 26msec. Accordingly, each request for streaming is transmitted with an interval of 26msec. In addition to audio compression files, such as WMA and OGG files, video compression files also have different data sizes and intervals.

The MCU that is a control unit of the digital data recording and/or reproducing apparatus 520 sequentially decodes each predetermined unit of the multimedia file by using a decoder according to a sequential frame reproduction command from the A/V system 510. The MCU also transmits the decoded file through the first bulk interface. The MCU of the A/V system 510 receives data in reception units in step 1510. Until the number of receptions of reproduced data is equal to the number of receptions determined to be required by referring to the size of data to be received in step 1512, steps 1508 and 1510 are repeatedly performed. Then, the received data is converted into analog data and then output in step 1514. If the data is encrypted data, the data is decrypted and then output. If an exemplary embodiment of the present invention uses a bulk interface for transmission of streaming data in relation to the size of a multimedia file, the A/V system may omit a synchronization process required between the two devices. This is significantly different from an embodiment that uses an isochronous interface.

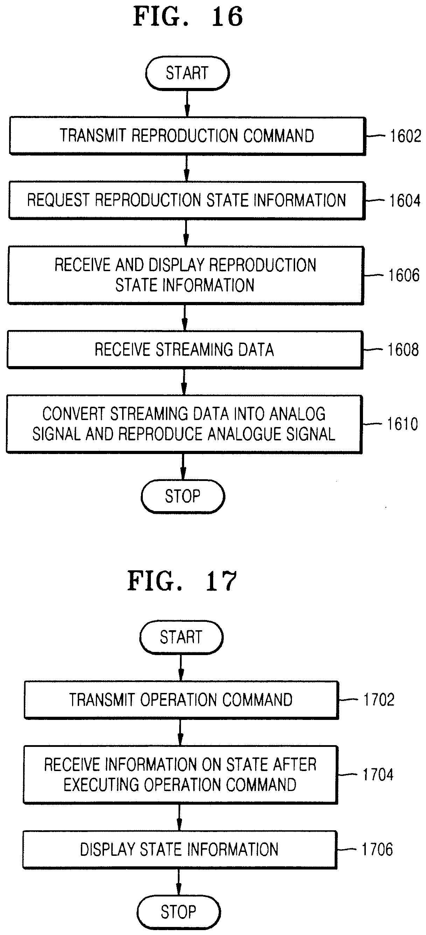

FIG. 16 is a flowchart illustrating a method of reproducing a multimedia file of the external device 520 in the A/V system 510 of FIG. 12 according to another exemplary embodiment of the present invention.

Referring to FIG. 16, if the user presses a reproduction button of the A/V system 510, a reproduction command is transmitted through a bulk interface in step 1602. Certain exemplary embodiments of the present invention may be implemented so that the user's reproduction command is received through an input unit of the digital data recording and/or reproducing apparatus 520 and a control signal corresponding to the input is transmitted to the A/V system 510. This can be applied to the exemplary embodiment of the present invention illustrated in FIG. 15. When the reproduction command is transmitted, the A/V system can request reproduction state information together in step 1604. The reproduction state information received from the digital data recording and/or reproducing apparatus 520 is output to a display in step 1606. In step 1608 streaming data corresponding to a file of which reproduction is requested is received through an isochronous interface or bulk interface as a response to the reproduction command.

The received streaming data is converted into analog data and reproduced in step 1610.

In the exemplary embodiments of the present invention illustrated in FIGS. 15 and 16, the streaming data is decrypted using this encryption key and then, converted into analog data and reproduced when an encryption key is received from the digital recording and/or reproducing apparatus 520. When encoded data that is not decoded raw data, is received, a process of decoding the data is subsequently required. This is because the size of decoded raw data is relatively larger, and the A/V system 510 receives compressed data, decodes the data, and then, reproduces the decoded data.

FIG. 17 is a flowchart illustrating a method of executing an operation command of a digital data recording and/or reproducing apparatus 520 by the A/V system 510 of FIG. 12 according to an exemplary embodiment of the present invention.

Referring to FIG. 17, an operation command is initially transmitted to the digital data recording and/or reproducing apparatus 520 through a bulk interface in step 1702. The operation command is selected through a user input unit 913, and operation commands include 'reproduction', 'pause', and 'next song', among others. Once the operation command is executed, information on a state of the operation may be received from the multimedia file recording and/or reproducing apparatus 520 in step 1704. The received state information is displayed in step 1706 or used as control information.

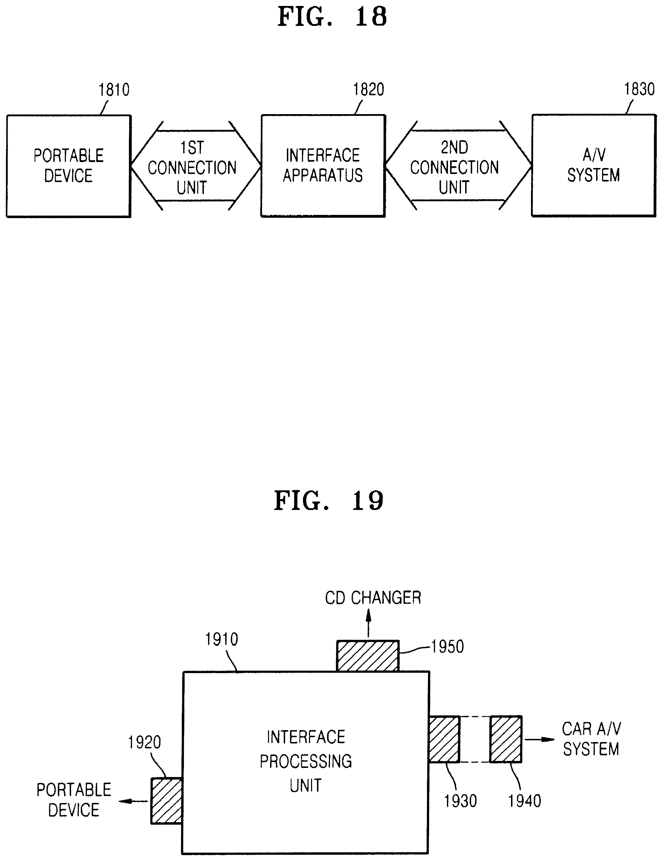

FIG. 18 is a block diagram illustrating an interface apparatus 1820 used to control a portable multimedia file recording and/or reproducing apparatus 1810 from an A/V system 1830 according to an exemplary embodiment of the present invention.

Referring to FIG. 18, the interface apparatus 1820 according to the exemplary embodiment of the present invention is connected to the portable device 1810 through a first connection unit, and to the A/V system 1830 through a second connection unit. The interface apparatus 1820 may comprise a first connection unit, a second connection unit and an interface processing unit. The first connection unit connects the portable device 1810 and the second connection unit connects the A/V system 1830. The interface processing unit converts the data format of the first connection unit into the data format of the second connection unit, or converts the data format of the second connection unit into the data format of the first connection unit, and outputs the converted data.

According to an exemplary embodiment of the present invention, the first connection unit and the second unit may be implemented as a USB connection unit and a serial connection unit, respectively. However, the first and second connection units are not limited to those of predetermined protocols. According to an exemplary implementation, the A/V system 1830 can be used without any modification, and the portable device 1810 only needs to be upgraded with firmware supporting a USB device according to the present invention.

FIG. 19 is a diagram illustrating an interface apparatus applied to a car A/V system according to an exemplary embodiment of the present invention. In this case, the interface apparatus is connected between a CD change interface and a USB interface of a portable device.

Referring to FIG. 19, a USB connection unit 1920 and a first serial connection unit 1930 are included in the interface apparatus. The USB connection unit 1920 connects the portable device to a USB cable, and a first serial connection unit 1930 connects the car A/V system to a serial cable that is the CD changer interface. An interface processing unit 1910 is a module processing a link between the car A/V system and the portable device and processes conversion of data between the portable device and the car A/V system. Data received from the portable device through the USB connection unit 1920 is converted into a format that complies with a protocol for connection with the car A/V system. The data is then output to the car A/V system through the first serial connection unit 1930, and data received from the car A/V system through the first serial connection unit 1930 is converted into a USB data format and output to the portable device through the USB connection unit 1920.

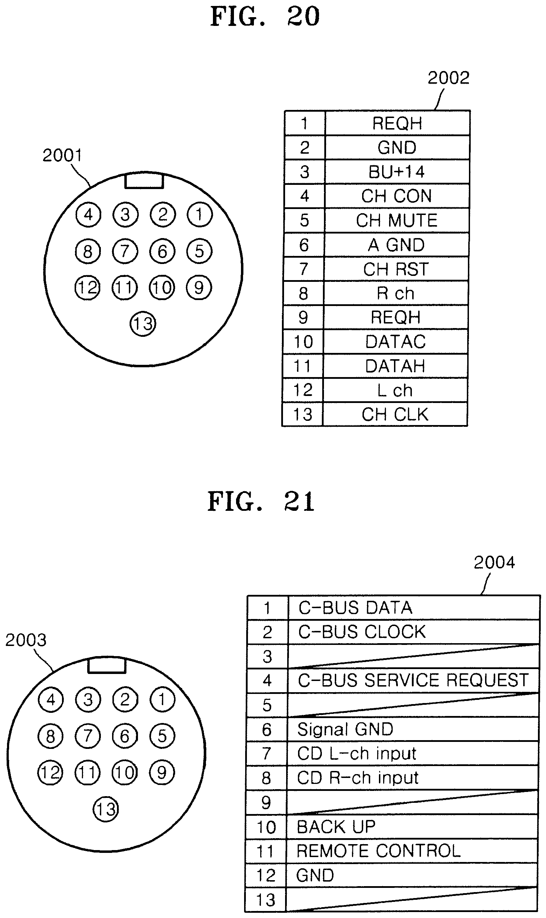

FIGS. 20 and 21 are diagrams illustrating pin arrangements of serial cables used in an A/V system according to an exemplary embodiment of the present invention.

FIGS. 20 and 21 illustrate the numbering of pin arrangements 2001 and 2003 of serial cables connected to a head unit. This numbering is identical. However, the use of each pin of the pin arrangements 2001 and 2003 is set differently by each car A/V system manufacturer as shown in the charts 2002 and 2004, respectively. For example, serial cables, such as M-BUS of Alpine, IP-BUS of Pioneer, C-BUS of Clarion, and ACP BUS of Ford, employ different connection protocols, respectively. Hereinafter, a term, X-BUS, will be used to collectively indicate interfaces of all manufacturers between a car A/V system and a CD changer.

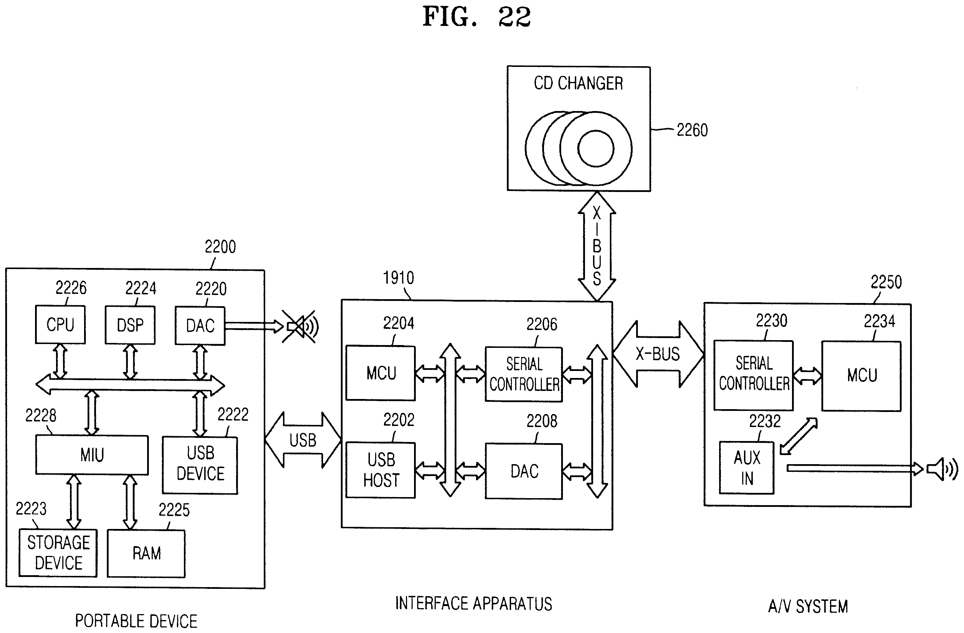

According to an exemplary embodiment of the present invention as illustrated in FIG. 19, a conversion unit 1940 may also be included. The conversion unit 1940 is connected to the front end of the first serial connection unit 1930 and converts pin inputs of the car A/V system to fit the pin arrangement of the first serial connection unit 1930. This is a hardware-based method to correctly input data to a corresponding pin. If there is no conversion unit 1940, a software-based data conversion is required because data input to the interface processing unit 1910 has a different structure defined by each manufacturer. The software-based data conversion is achieved by using a microcontroller 2204 of FIG. 22.

The interface apparatus may further include a second serial connection unit 1950 for connection to and for use with the CD changer. A user's desire to use the portable device or the CD changer may be input through an input unit (not shown), such as buttons. If the user selects the CD changer as the device to be used, data of the CD changer can be reproduced through a bypass unit (not shown) by directly connecting the first serial connection unit 1930 and the second serial connection unit 1940.

FIG. 22 is a diagram illustrating a detailed structure of the interface apparatus of FIG. 19 and a connection to an A/V system and a portable device according to an exemplary embodiment of the present invention.

Referring to FIG. 22, the interface processing unit 1910 of the interface apparatus comprises a USB host controller 2202, a serial controller 2206, an MCU 2204, and a D/C conversion unit 2208. As illustrated in FIG. 22, the interface processing unit 1910 is connected to a portable device 2200 through a USB interface. The interface processing unit 1910 is connected to a car A/V system 2250 and a CD changer 2260 through an X-BUS interface. Also, when the portable device 2200 is operating as a portable disc (Mass Storage Class), the interface processing unit 1910 may further include a digital signal processor (DSP, not shown) decoding files received from the portable device 2200. When the portable device 2200 is an MP3 player, the DSP plays a role of an MP3 decoder.

The USB host controller 2202 controls data communication with the portable device 2200 through a USB connection unit 1920 (shown on FIG. 19) of the interface processing unit 1910. The USB host communicates with a USB device controller 2222 of the portable device 2200. The serial controller 2206 controls data communication with the car A/V system 2250 through a first serial connection unit 1930 (shown on FIG. 19) and communicates with a serial controller 2230 of the car A/V system 2250.

The MCU 2204 converts a control signal input from the serial controller 2206 into a USB command and outputs the USB command to the USB host controller 2202. Also, the MCU 2204 converts reproduction information input from the USB host controller 2202 into data complying with the protocol for connection with the car A/V system 2250 and outputs the converted data to the serial controller 2206.

The portable device 2200 is a multimedia file recording and/or reproducing apparatus which comprises a central processing unit (CPU) 2226, a DSP 2224, a DAC 2220, a memory interface unit (MIU) 2228, a storage device 2223, a RAM 2225 and the USB device controller 2222. If the portable device 2200 receives a reproduction command through the USB host controller 2202, the portable device 2200 does not directly reproduce a stream decoded through the DSP 2224 or a codec (not shown), but performs upstreaming of the stream through the USB device controller 2222.

The interface processing unit 1910 receives multimedia data through the USB host controller 2202. The multimedia data is converted into analog data by the DAC 2208 and transmitted to the car A/V system through the X-BUS. The transmitted data is input to an amplifier (AUX) 2232 and reproduced. This process is analogous to the process involving a CD changer which is connected for reproduction.

Meanwhile, when the user selects the CD changer 2260 as the device to be used, the MCU 2204 controls a bypass unit (not shown) so that data can be communicated directly between the car A/V system 2250 and the CD changer 2260.

The USB interface between the USB device controller 2222 and the USB host controller 2202 of FIG. 22 can be set as the structure illustrated in FIG. 10 or 11.

However, the structure of the USB interface is not limited these structures.

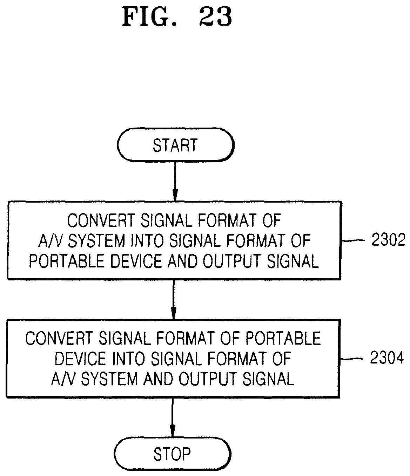

FIG. 23 is a flowchart illustrating an interface method according to an exemplary embodiment of the present invention.

Referring to FIG. 23, the interface apparatus 1820 (see FIG. 18), according to an exemplary embodiment of the present invention, converts the format of a signal of an A/V system into the format of a signal of a portable device. In step 2302, the interface apparatus 1820 outputs the converted signal, and converts the format of a signal of the portable device into the format of a signal of the A/V system and outputs the converted signal in step 2304.

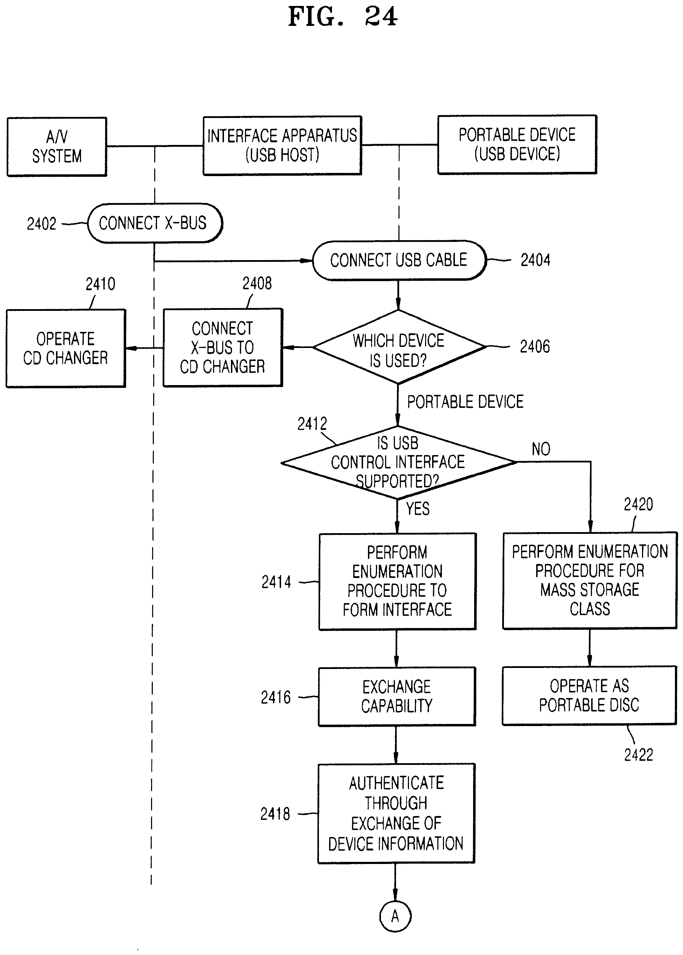

FIG. 24 is a flowchart illustrating a method of connecting an A/V system and a device using an interface apparatus according to an exemplary embodiment of the present invention.

Referring to FIG. 24, if an X-BUS is connected between the car A/V system and the interface apparatus in step 2402, and a USB cable is connected between the interface apparatus and the portable device in step 2404, a determination is made as to whether the device to be used is the portable device or a CD changer in step 2406. If the CD changer is to be used, the X-BUS is connected to the CD changer in step 2408, and a control signal from the car A/V system is transferred to the CD changer so that the CD changer begins operation in step 2410. According to an exemplary implementation, the control signal from the car A/V system is transferred to the CD changer through a second serial connection unit and a path for data communication with the portable device is cut off.

If the portable device is to be used, examination occurs through a USB host and an inquiry is made as to whether the portable device supports a USB control interface according to an exemplary embodiment of the present invention in step 2412. If the portable device supports the USB control interface, an enumeration procedure to form one or more endpoints for data communication is performed referring to descriptor information of a USB device in step 2414. Information required for the enumeration procedure is transmitted and received through the endpoints as described above. If a determination is made in step 2412 that the portable device does not support the USB control interface according to an exemplary embodiment of the present invention, an enumeration procedure for Mass Storage Class is performed in step 2420 because the portable device should be connected as a device according to Mass Storage Class, and then, the portable device begins to operate as a portable disc in step 2422. According to an exemplary implementation, a multimedia file transmitted from the portable device is reproduced through a DSP (decoder) of the interface apparatus.

If the forming of the USB control interface is completed, the two devices exchange information on their functions and specifications so that capability can be verified in step 2416. According to the result of this verification, an operation command and data type to be transmitted and received thereafter are determined.

Also, authentication can be performed by exchanging information on the names of their manufacturers or serial numbers in step 2418. If the authentication fails, the portable device is recognized as a portable disc and operates as a portable disc.

If the authentication is successful, the portable device can be controlled from the car A/V system. First, a control signal from the car A/V system is received through a first serial connection unit. The control signal corresponds to commands, such as 'reproduce', 'pause', and 'next song', among others. The control signal is converted into a USB command, and transmitted to the portable device through a USB connection unit. In response to the control signal, digital data form the portable device is received through the USB connection unit. The received digital data is converted into serial data complying with a protocol for connection to the car A/V system and transmitted to the car A/V system.

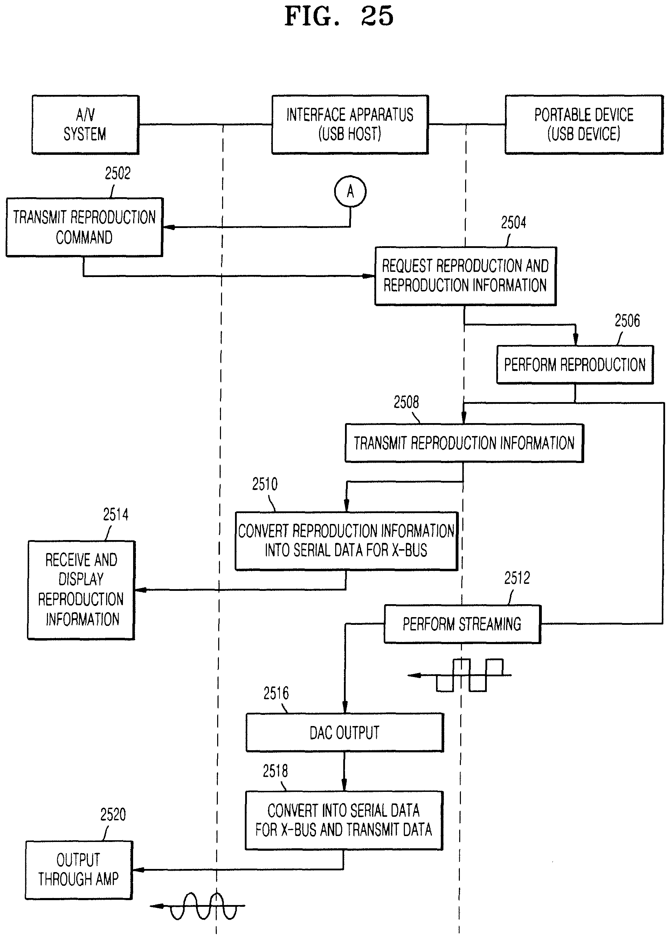

FIG. 25 is a flowchart illustrating a method of reproducing data of a portable device in an A/V system using an interface apparatus according to an exemplary embodiment of the present invention. FIG. 11 illustrates an example of the structure of a USB interface which is used. This method may be applied similarly to the structure illustrated in FIG. 10, and may also be applied to other structures of the USB interface.

Referring to FIG. 25, if a user presses a reproduction button of the car A/V system, a control signal (reproduction command) corresponding to the button is transmitted to the interface apparatus in step 2502. The transmitted control signal is converted into a USB command in the interface apparatus and transmitted to the portable device through a bulk output endpoint. At this time, reproduction information is also requested in step 2504. The portable device reads a file of which reproduction is required and decodes the file. The portable device then loads the generated raw data (in the form of BMP or PCM data) on a USB buffer. The loaded data is streamed through an isochronous or bulk input endpoint in step 2512. Reproduction information is simultaneously transmitted through the bulk input endpoint in step 2508.

When the digital data transmitted to the interface apparatus is the reproduction requested multimedia data, the data is converted into analog data through a DAC in step 2516 and transmitted to the car A/V system through the X-BUS in step 2518. The transmitted signal is output through an amplifier in step 2520. When the digital data that is transmitted to the interface apparatus is reproduction information, the information is converted into serial data for the X-BUS and transmitted to the car A/V system in step 2510. The car A/V system receives the reproduction information and displays the information in step 2514.

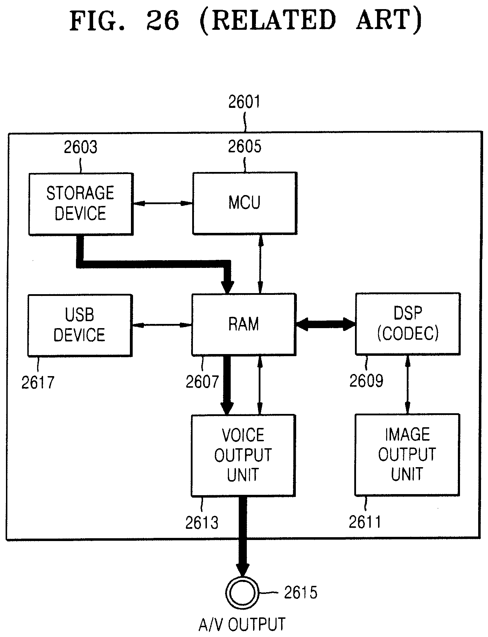

An exemplary embodiment of the present invention in which a digital data recording and/or reproducing apparatus controls DRM-decrypted data so that the data can be selectively transmitted to a D/A conversion unit or a USB interface will now be explained with reference to FIGS. 26 through 36.

FIG. 26 illustrates a structure of a conventional MP3 reproducing apparatus and a file reproduction data path.

First, an MCU 2605 initializes all elements inside the MP3 reproducing apparatus. Next, the MCU 2605 reads 512 bytes that are part of an MP3 file to be reproduced. Finally, the MCU 2605 stores the data in a RAM 2607. If the storing is completed, the MCU 2605 commands a DSP 2609 that is a reproduction unit, to reproduce the data. If the reproduction is completed, the reproduction unit 2609 stores the reproduced data in a predetermined space of a RAM 2607 allocated in advance by the MCU 2605. The MCU 2605 transfers the stored data to a voice output unit 2613 that is an audio output unit, so that a audio signal can be output.

The MCU 2605 displays a variety of information items, such as file names and the type of codec, which can be obtained after the initialization so that a user can recognize the information through an image output unit 2611. Also, the MCU 2605 repeats the process from the initialization so that an entire MP3 file can be reproduced.

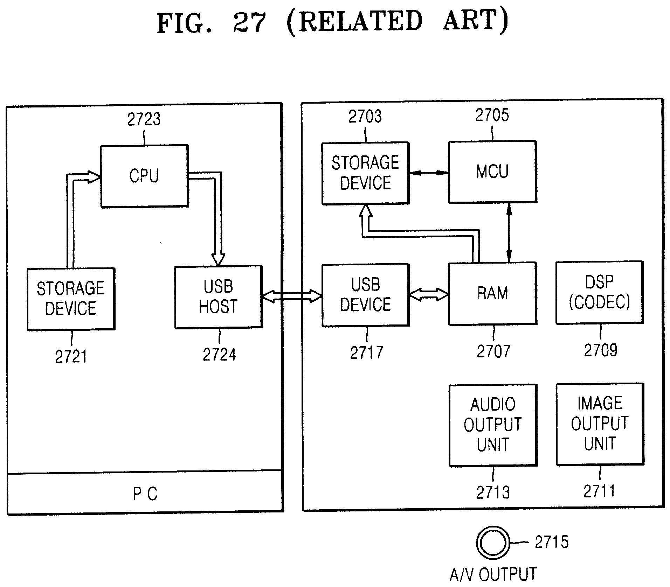

FIG. 27 illustrates a path through which an encrypted MP3 file is received in a conventional MP3 reproducing apparatus. The MP3 file is received from a personal computer (PC). FIG. 27 illustrates a process in which a user transmits a file bought through the PC to the MP3 reproducing apparatus. The MP3 file here is protected by a DRM technology.

If the PC and the MP3 reproducing apparatus are initially connected using a USB, information (such as manufacturer, model name, and manufacturing number, among others) unique to the MP3 player is transmitted to the PC. The MP3 file bought by the user is transmitted to the MP3 reproducing apparatus through a CPU 2723 from a storage device 2721, such as a hard disk drive (HDD). At this time, the MP3 file is transmitted in predetermined units according to an encryption method based on the unique information of the MP3 reproducing apparatus transmitted to the PC as described above. A predetermined unit of the file transmitted to a USB device controller 2717 of the MP3 reproducing apparatus through a USB host controller 2724 is stored in a storage device 2703 by an MCU 2705.

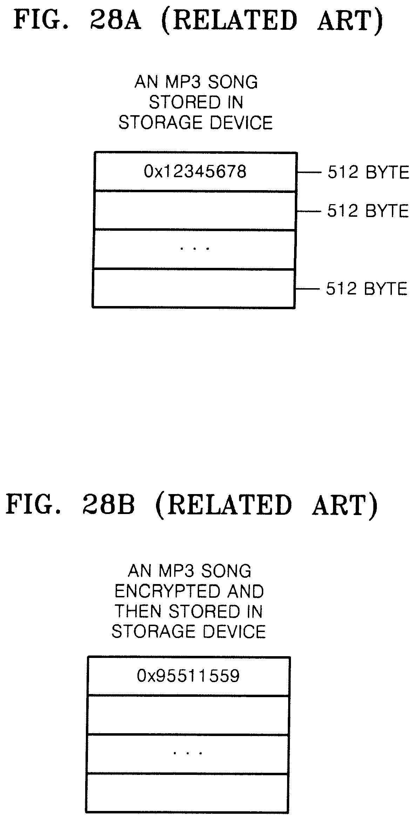

FIGS. 28A and 28B are diagrams illustrating an encryption method according to an exemplary embodiment of the present invention. FIG. 28A illustrates an example of original data, while FIG. 28B illustrates an example of encrypted version of the original data.

Referring to FIGS. 28A and 28B, when it is assumed that part of the original data is "0x12345678", an XOR operation with "0x87654321" is performed and data, "0x95511559", is generated. This state can be regarded as an encrypted state.

Accordingly, if a reproduction unit 2709 does not know that the original data is encrypted with "0x87654321", the data cannot be reproduced normally. However, if a MCU 2705 as described in FIG. 27 decrypts the data and transmits the decrypted data to the reproduction unit 2709. For example, if an XOR operation is performed and data identical to the original data is transmitted, the data can be reproduced.

$$\text{Encryption: } 0x12345678 \text{ XOR } 0x87654321 = 0x95511559$$

$$\text{Decryption: } 0x95511559 \text{ XOR } 0x87654321 = 0x12345678$$

According to an exemplary implementation, '0x87654321' is assumed to be used for the XOR operation and is a value generated for encryption between the PC and the MP3 reproducing apparatus.

This value is known to both devices, but should not be transmitted to the outside of the devices.

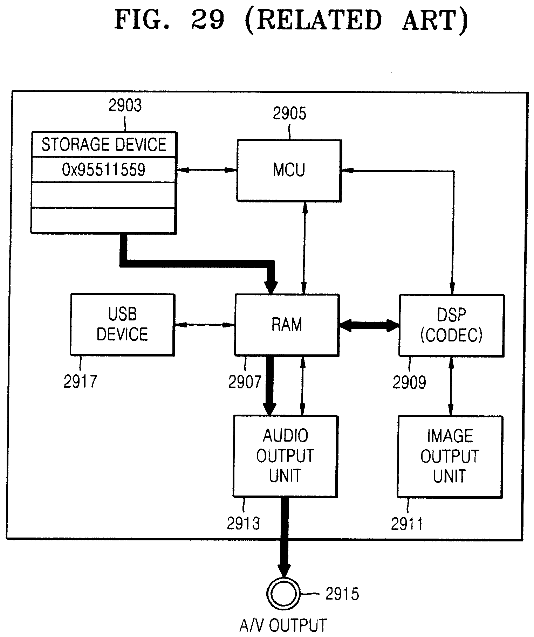

FIG. 29 is a diagram illustrating a data path through which a file encrypted in a conventional MP3 reproducing apparatus is reproduced. The method illustrated in FIG. 29 is similar to the method of reproducing a file in the ordinary MP3 reproducing apparatus (as illustrated in FIG. 26), except that the method of FIG. 29 has an additional operation for decrypting an encrypted MP3 file read from a storage device 2903.

For example, an MCU 2905 reads data, "0x95511559", transmitted through a USB device controller 2917 and then stored in a storage device 2903. Then, the MCU 2905 decrypts the data "0x95511559" with an operation "XOR 0x87654321" to obtain "0x12345678" that represents data identical to the original data, and stores this in a RAM 2907. The stored data is reproduced through a DSP 2909 and output through an audio output unit 2913. Although the original data, "0x12345678", is used for convenience of explanation here, the size and contents of actual data values are different from this value, and the method and values used for encryption operations are not limited to the method illustrated.

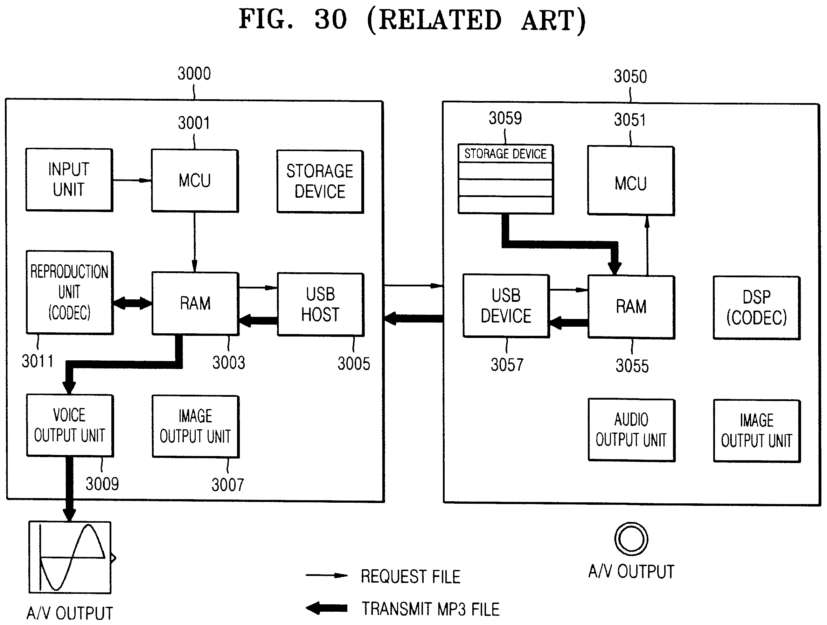

FIG. 30 is a diagram illustrating an example in which an MP3 reproducing apparatus is connected so that the apparatus operates as a conventional portable device.

Referring to FIG. 30, according to the conventional technology, when a USB host device 3000, such as a PC, is connected to an MP3 reproducing apparatus 3050 through a USB connection, the MP3 reproducing apparatus 3050 operates as a removable device (USB mass storage class). If a user's reproduction request is input through an input unit of the USB host device 3000, a file is requested through a file request path indicated by thin lines in FIG. 30. The requested MP3 file (or other compressed files, such as WMA, and OGG files) is transmitted through a file transmission path indicated by thick lines in FIG. 30.

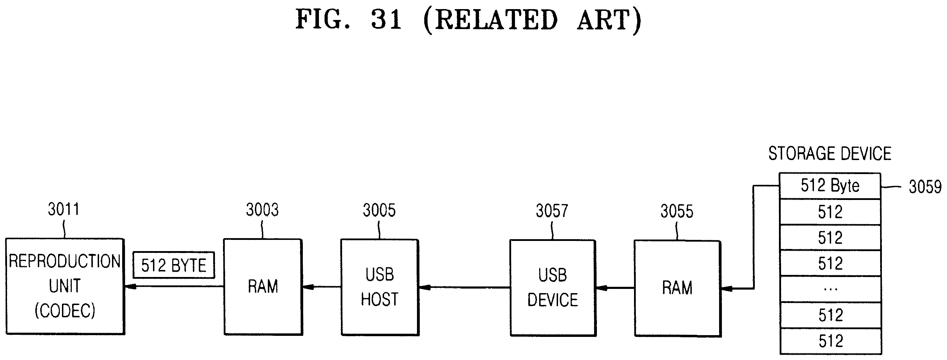

FIG. 31 is a diagram illustrating a path for transferring a requested file in the arrangement of FIG. 30.

Referring to FIG. 31, a requested file is transmitted in predetermined units with respect to a file type. For example, every 512 bytes of the requested file is read and transmitted from a storage device 3059. The data that is read and temporarily stored in a RAM 3055 is transmitted to a USB host controller 3005 through a USB device controller 3057. The transmitted file is stored in a RAM 3003 of a USB host device 3000, reproduced through a reproduction unit 3011, and converted into analog data and output externally through an audio output unit 3009.

If the transmitted 512-byte data is an encrypted value (for example, 0x95511559), the host device 3000 does not have an encryption key (for example, 0x87654321) to reproduce the data and therefore cannot reproduce the data.

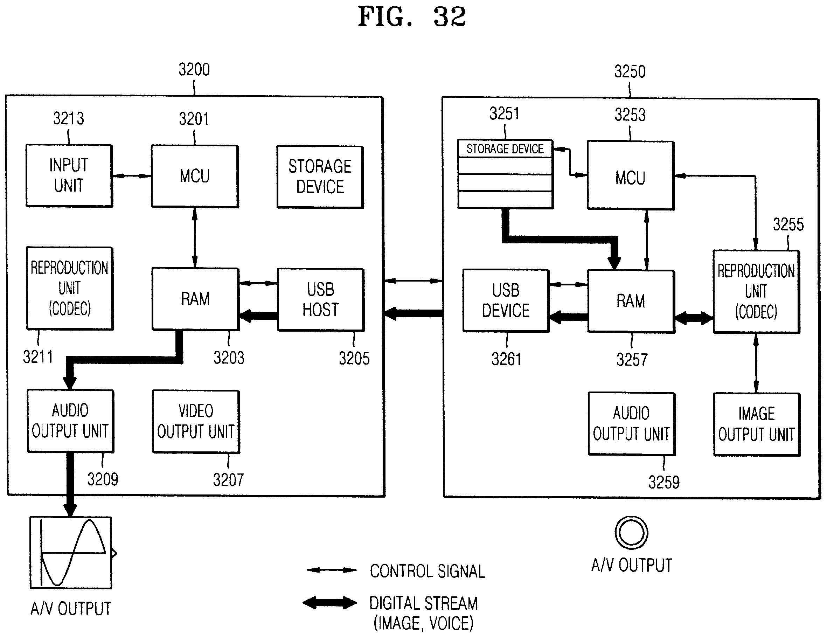

FIG. 32 is a diagram illustrating a structure of an MP3 reproducing apparatus 3250 connected to a USB host device 3200 and a path for reproducing a file according to an exemplary embodiment of the present invention. A path for transferring a control signal is indicated by thin lines and a path for transferring a digital stream is indicated by thick lines.

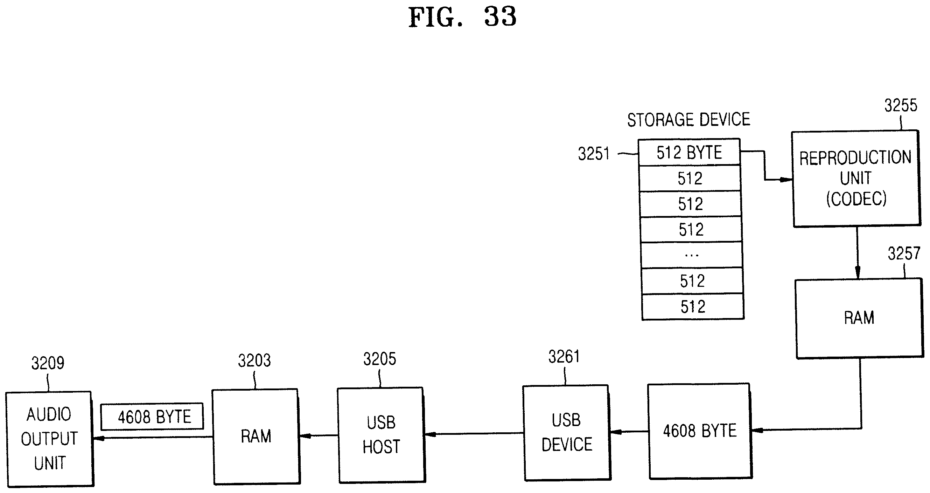

FIG. 33 is a diagram illustrating a path for transferring an MP3 file in the arrangement of FIG. 32 according to an exemplary embodiment of the present invention.

FIGS. 32 and 33 differ from the conventional technology illustrated in FIGS. 30 and 31. According to an exemplary embodiment of the present invention, data in the form in which reproduction of the data is completed by a reproduction unit 3255 of the MP3 reproducing apparatus 3250 is transmitted to a USB host device 3200 through USB interfaces 3261 and 3205. Accordingly, the transmitted data is output through a RAM 3203 and a audio output unit 3209, and does not pass through a codec 3211 of the USB host device 3200.

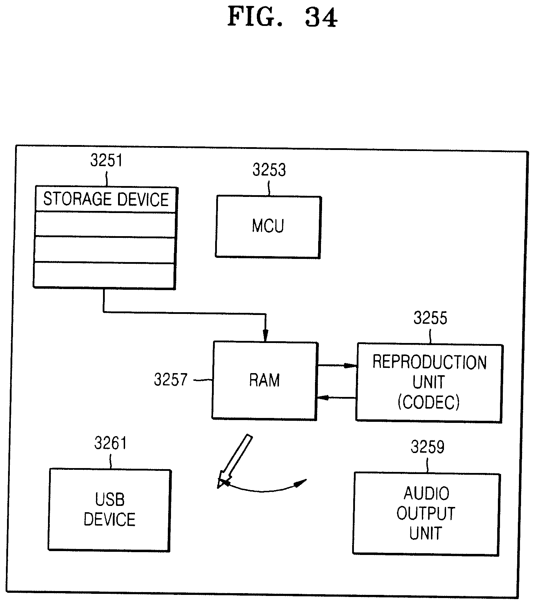

FIG. 34 is a block diagram illustrating a switching principle for switching a data transfer direction according to an exemplary embodiment of the present invention.

Referring to FIG. 34, in the exemplary embodiment of the present invention, the direction of transmitting data is changed by internal switching based on software. That is, when data is output through a USB host device 3200 as illustrated in FIG.32, reproduced data stored in a RAM 3257 is transferred to a USB device controller 3261, and when the MP3 reproducing apparatus 3250 itself outputs the data, switching is performed so that data can be transferred to an audio output unit 3259.

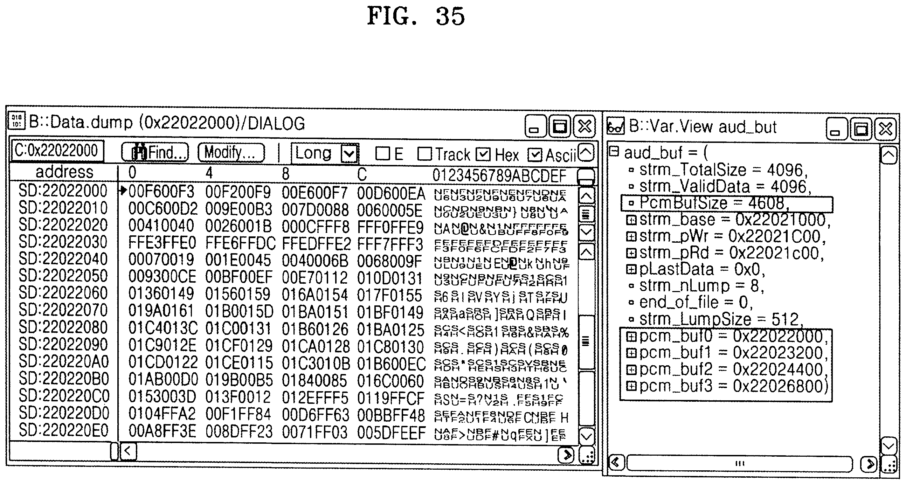

FIG. 35 is a view illustrating an example of data stored in the RAM 3203 of FIG. 33 according to an exemplary embodiment of the present invention. Referring to FIG. 35, it can be seen that data of which reproduction is completed is transmitted unlike the conventional portable device.

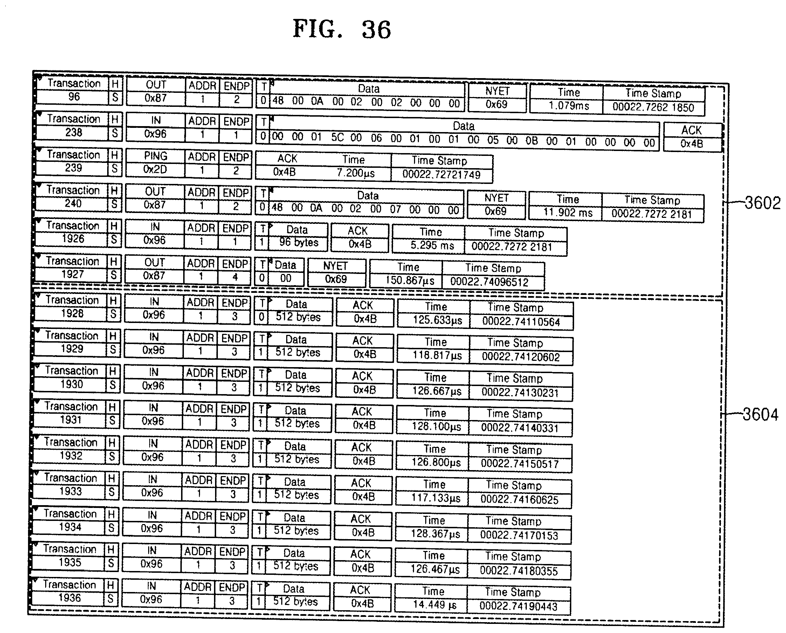

FIG. 36 is a view illustrating an example of data analysis that is transmitted and received between devices when an interface method according to an exemplary embodiment of the present invention is implemented. FIG. 36 illustrates the storage of data transmitted and received between devices through a USB cable in a USB signal analyzer.

Referring to FIG. 36, the top portion 3602 illustrates the transmission of a signal for controlling an MP3 reproducing apparatus. The top portion 3602 also illustrates that a resulting value is received, and the bottom portion 3604 illustrates that a reproduced audio signal is transmitted.

According to an exemplary embodiment of the present invention as described above, without separately manipulating an A/V system and a portable multimedia file recording and/or reproducing apparatus the portable device can be controlled and content files of the portable device can be reproduced through the A/V system by manipulating only the A/V system.

Also, according to an exemplary embodiment of the present invention, control and streaming of a portable device is facilitated without the addition of a separate device, or by adding only an interface box, and without changing a conventional A/V system. At this time, even when the A/V system is not equipped with a variety of codecs, reproduction through the A/V system is enabled such that a problem of code compatibility may be solved.

Furthermore, by using a user interface for operating an unaltered conventional CD changer, a portable device can be operated from an A/V system.

Also, in the case of digital content files protected by the DRM, by transmitting only the streaming and avoiding transmission of the file to the A/V system, utilization of an offline device, such as a car audio system, can be increased.

In addition, by using the USB interface, a large amount of reproduction information and a variety of A/V signals can be quickly transmitted, better compatibility with conventional portable devices can be provided, and power can be supplied to the portable device.

The present invention can also be embodied as computer readable code on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves. The computer readable recording medium can also be distributed over network coupled computer systems so that the computer readable code is stored and executed in a distributed fashion.

While the present invention has been shown and described with reference to certain exemplary embodiments thereof, it will be understood by those skilled in the art that various changes in form and details may be made therein without departing from the scope of the invention as defined by the appended embodiments.

**Claims**

1. A digital data recording and/or reproducing apparatus (520), the apparatus comprising:

   a storage unit (620) for storing digital data encoded in a predetermined format;
   a decoder unit (650) for decoding digital data stored in the storage unit;
   an interface unit (630) comprising a USB device controller for transmitting the decoded digital data to an audio/video system (510); and
   a control unit (610) for controlling the storage unit, the decoder unit, and the interface unit, wherein:

   the control unit controls the decoder unit to decode the stored digital data in units determined by the audio/video system according to a control signal requesting the stored digital data from the audio/video system, the units being determined by transferring information on the digital data from the digital data recording and/or reproducing apparatus to the audio/video system, and
   the USB device controller comprises a streaming terminal transmitting the decoded digital data decoded in the determined units, an interface terminal receiving the control signal requesting the stored digital data from the audio/video system, and a setup terminal for transmitting and receiving information required to set the streaming and interface terminals.

2. The apparatus of claim 1, wherein, the interface terminal receives the control signal from the audio/video system and transmits information on the digital data requested by the audio/video system.

3. The apparatus of claim 1 or 2, wherein the USB device controller comprises an isochronous interface for transmission of the decoded digital data in response to the control signal from the audio/video system.

4. The apparatus of claim 3, wherein the USB device controller further comprises a bulk interface transmitting control information comprising a result of executing the control signal from the audio/video system.

5. The apparatus of claim 3 or 4, wherein the USB device controller receives a digital stream from the audio/video system through the isochronous interface, and the control unit encodes the received digital stream and stores the encoded digital stream in the storage unit.

6. The apparatus of claims 1 to 5, wherein if the digital data comprises encrypted data, the control unit decrypts the encrypted data and then transmits the decrypted data to the audio/video system by using an encryption method.

7. The apparatus of one of claims 1 to 6, further comprising an input unit receiving an input of a device using method, wherein if a command to use a conventional USB protocol is input through the input unit, the control unit controls the USB device controller so that the digital data recording and reproducing apparatus operates according to the conventional USB protocol.

8. The apparatus of one of claims 1 to 7, further comprising a digital/analog conversion unit converting the decoded digital data into analog data.

9. The apparatus of claim 8, wherein the control unit controls transmission of the decoded digital data so that the decoded digital data is selectively transmitted to at least one of the digital/analog conversion unit and the interface unit.

10. An audio/video system (510) for reproducing digital data, comprising:

    an interface unit (720) comprising a USB host controller (810) for receiving decoded digital data from a digital data recording and/or reproducing apparatus (520);
    a digital/analog conversion unit (730) for converting the received decoded digital data into analog data;
    an output unit for outputting the analog data; and
    a control unit (710) for controlling the interface unit and the digital/analog conversion unit, wherein:

the control unit determines units of the decoded digital data based on information on the digital data and, according to the determined units of the decoded digital data, the control unit transmits a control signal requesting the digital data, through the USB host controller, and

the USB host controller comprises a streaming terminal (1004, 1104) for receiving the decoded digital data in the determined units, an interface terminal (1006, 1106) transmitting the control signal to the digital data recording and/or reproducing apparatus (520), and a setup terminal for transmitting and receiving information required to set the streaming and interface terminals.

11. The system of claim 10, wherein the streaming terminal (1004, 1104) comprises an isochronous interface receiving the decoded digital data.

12. The system of claim 11, wherein the interface terminal (1006, 1106) further comprises a bulk interface receiving control information comprising a result of executing the control signal from the digital data recording and/or reproducing apparatus (520).

13. The system of claim 11 or 12, wherein through the streaming terminal (1004, 1104), the USB host controller (810) transmits a digital stream to be stored in the digital data recording and/or reproducing apparatus (520).

14. A method of reproducing digital data in a digital data recording and/or reproducing apparatus (520), the method comprising:

receiving (1302) a control signal from an audio/video system through a USB device controller;
decoding (1304) digital data stored in a digital data recording and/or reproducing apparatus (520) corresponding to the received control signal comprises a reproduction command; and
transmitting (1306) the decoded digital data to the audio/video system through the USB device controller, wherein:

the decoding of the digital data comprises decoding the digital data in units determined by the audio/video system according to the reproduction commands of the control signal transmitted from the audio/video system, the units being determined by transferring information on the digital data from the digital data recording and/or reproducing apparatus to the audio/video system,
the transmitting of the decoded digital data comprises transmitting the decoded digital data decoded in the determined units through a streaming terminal comprised in the USB device controller according to the reproduction commands of the control signal,
wherein the receiving of the control signal comprises receiving the control signal through an interface terminal included in the USB device controller, and
wherein the USB device controller further comprises a setup terminal for transmitting and receiving information required to set the streaming and interface terminals.

15. The method of claim 14, further comprising transmitting the information on the digital data, used to determine a number of determined units required for transmitting the decoded digital data and a time interval of the transmitting, to the audio/video system through at least one of the streaming terminal and the interface terminal.

16. The method of claim 14 or 15, wherein the transmitting of the decoded digital data comprises transmitting the decoded digital data through an isochronous interface included in the USB device controller.

17. The method of claim 16, wherein the receiving of the control signal comprises receiving the control signal through a bulk interface included in the USB device controller, and
the method further comprises transmitting a result of executing the control signal through the bulk interface.

18. The method of claim 14, wherein the transmitting of the decoded digital data further comprises encrypting the decoded digital data.

19. The method of claim 14, further comprising:

receiving an input on a device using method; and
controlling the USB device controller so that the digital data recording and reproducing apparatus operates as a portable device if a command to use the apparatus as a portable device is input.

**20.** A method for reproducing digital data stored on a digital data recording and/or reproducing apparatus (520) through an audio/video system (510), the method comprising:

transmitting (1602) a control signal to the digital data recording and/or reproducing apparatus to command the digital data to be reproduced;
receiving (1608) decoded digital data from the digital data recording and/or reproducing apparatus in response to the control signal; and
converting (1610) the decoded digital data into analog data and outputting the analog data,
wherein data/signal communication with the digital data recording and/or reproducing apparatus is performed through a USB host controller (810), wherein:

the transmitting of the control signal comprises:

determining (1506) units of the decoded digital data based on information on the digital data; and
transmitting (1508), through an interface terminal (1006, 1106) included in the USB host controller (810), the control signal requesting the digital data through the USB host controller,

the receiving the decoded digital data comprises:
receiving (1510) the decoded digital data in the determined units through a streaming terminal (1004, 1104) included in the USB host controller, and
the USB host controller further comprises a setup terminal for transmitting and receiving information required to set the streaming and interface terminals.

**21.** The method of claim 20, further comprising receiving information on the digital data from the digital data recording and/or reproducing apparatus through at least one of the streaming terminal (1004, 1104) and the interface terminal (1006, 1106).

**22.** The method of claim 20 or 21, wherein in the receiving of the decoded digital data, the decoded digital data is received through an isochronous interface included in the USB host controller (810).

**23.** The method of claim 22, wherein the transmitting of the control signal comprises transmitting the control signal through a bulk interface included in the USB host controller, and
the method further comprises receiving a result of executing the control signal through the bulk interface.

**24.** A computer readable medium having embodied thereon a computer program for executing the method for reproducing a multimedia file of one of claims 14 to 19.

**25.** A computer readable medium having embodied thereon a computer program for executing the method of one of claims 20 to 23.

**Patentansprüche**

**1.** Aufzeichnungs- und/oder Wiedergabevorrichtung für digitale Daten (520), wobei die Vorrichtung umfasst:

eine Speichereinheit (620) zur Speicherung digitaler Daten, die in einem vorbestimmten Format codiert sind;
eine Decodiereinheit (650) zum Decodieren digitaler Daten, die in der Speichereinheit gespeichert sind;
eine Schnittstelleneinheit (630) mit einer USB-Gerätesteuerung zum Senden der decodierten digitalen Daten an ein Audio/Video-System (510); und
eine Steuereinheit (610) zur Steuerung der Speichereinheit, der Decodiereinheit und der Schnittstelleneinheit, wobei:

die Steuereinheit die Decodiereinheit steuert, die gespeicherten digitalen Daten in Einheiten, die durch das Audio/Video-System bestimmt werden, entsprechend einem Steuersignal zu decodieren, das die gespeicherten digitalen Daten aus dem Audio/Videosystem anfordert, wobei die Einheiten durch Übertragen von Information über die digitalen Daten von der Aufzeichnungs- und/oder Wiedergabevorrichtung für digitale Daten zu dem Audio/Video-System bestimmt werden, und
die USB-Gerätesteuerung einen Datenstromanschluss, der die decodierten digitalen Daten, die in den bestimmten Einheiten decodiert sind, sendet, einen Schnittstellenanschluss, der das Steuersignal, das die gespeicherten digitalen Daten aus dem Audio/Video-System anfordert, empfängt, und einen Einstellanschluss aufweist zum Senden und Empfangen von Information, die zur Einstellung des Datenstrom- und Schnittstellenanschlusses erforderlich ist.

2. Vorrichtung nach Anspruch 1, wobei der Schnittstellenanschluss das Steuersignal aus dem Audio/Videosystem empfängt und Information über die von dem Audio/Video-System angeforderten digitalen Daten sendet.

3. Vorrichtung nach Anspruch 1 oder 2, wobei die USB-Gerätesteuerung eine isochrone Schnittstelle zum Senden der decodierten digitalen Daten in Reaktion auf das Steuersignal aus dem Audio/Video-System aufweist.

4. Vorrichtung nach Anspruch 3, wobei die USB-Gerätesteuerung ferner eine Schnittstelle für unstrukturierte Datensätze aufweist, die Steuerinformation sendet, die ein Ergebnis des Ausführens des Steuersignals aus dem Audio/Video-System enthält.

5. Vorrichtung nach Anspruch 3 oder 4, wobei die USB-Gerätesteuerung einen digitalen Datenstrom aus dem Audio/Video-System über die isochrone Schnittstelle empfängt, und die Steuereinheit den empfangenen digitalen Datenstrom codiert und den codierten digitalen Datenstrom in der Speichereinheit speichert.

6. Vorrichtung nach einem der Ansprüche 1 bis 5, wobei, wenn die digitalen Daten verschlüsselte Daten enthalten, die Steuereinheit die verschlüsselten Daten entschlüsselt und anschließend die entschlüsselten Daten an das Audio/Video-System unter Anwendung eines Verschlüsselungsverfahrens sendet.

7. Vorrichtung nach einem der Ansprüche 1 bis 6, die ferner eine Eingabeeinheit aufweist, die eine Eingabe eines Geräts unter Anwendung eines Verfahrens empfängt, wobei, wenn ein Befehl zur Verwendung eines konventionellen USB-Protokolls über die Eingabeeinheit eingegeben wird, die Steuereinheit die USB-Gerätesteuerung derart steuert, dass die Aufzeichnungs- und/oder Wiedergabevorrichtung für digitale Daten gemäß dem konventionellen USB-Protokoll arbeitet.

8. Vorrichtung nach einem der Ansprüche 1 bis 7, die ferner eine Digital/Analog-Umwandlungseinheit zur Umwandlung der decodierten digitalen Daten in analoge Daten aufweist.

9. Vorrichtung nach Anspruch 8, wobei die Steuereinheit das Senden der decodierten digitalen Daten derart steuert, dass die decodierten digitalen Daten selektiv an die Digital/Analog-Umwandlungseinheit und/oder die Schnittstelleneinheit gesendet werden.

10. Audio/Video-System (510) zur Wiedergabe digitaler Daten, mit:

   einer Schnittstelleneinheit (720) mit einer USB-Hoststeuerung (810) zum Empfang decodierter digitaler Daten aus einer Aufzeichnungs- und/oder Wiedergabevorrichtung für digitale Daten (520);
   einer Digital/Analog-Umwandlungseinheit (730) zur Umwandlung der empfangenen decodierten digitalen Daten in analoge Daten;
   einer Ausgabeeinheit zur Ausgabe der analogen Daten; und
   einer Steuereinheit (710) zur Steuerung der Schnittstelleneinheit und der Digital/Analog-Umwandlungseinheit, wobei:

   die Steuereinheit Einheiten der decodierten digitalen Daten auf der Grundlage von Information über die digitalen Daten bestimmt, und entsprechend den bestimmten Einheiten der decodierten digitalen Daten die Steuereinheit über die USB-Hoststeuerung ein Steuersignal sendet, das die digitalen Daten anfordert und
   die USB-Hoststeuerung einen Datenstromanschluss (1004, 1104) zum Empfang der decodierten digitalen Daten in den bestimmten Einheiten, einen Schnittstellenanschluss (1006, 1106) zum Senden des Steuersignals an die Aufzeichnungs- und/oder Wiedergabevorrichtung für digitale Daten (520) und einen Einstellanschluss zum Senden und Empfangen von Information, die zum Einstellen des Datenstromanschlusses und des Schnittstellenanschlusses erforderlich ist, aufweist.

11. System nach Anspruch 10, wobei der Datenstromanschluss (1004, 1104) eine isochrone Schnittstelle, die die decodierten digitalen Daten empfängt, aufweist.

**12.** System nach Anspruch 11, wobei der Schnittstellenanschluss (1006, 1106) ferner eine Schnittstelle für unstrukturierte Datensätze aufweist, die Steuerinformation empfängt, die ein Ergebnis des Ausführens des Steuersignals aus der Aufzeichnungs- und/oder Wiedergabevorrichtung für digitale Daten (520) enthält.

**13.** System nach Anspruch 11 oder 12, wobei über den Datenstromanschluss (1004, 1104) die USB-Hoststeuerung (810) einen digitalen Datenstrom sendet, der in der Aufzeichnungs- und/oder Wiedergabevorrichtung für digitale Daten (520) zu speichern ist.

**14.** Verfahren zur Wiedergabe digitaler Daten in einer Aufzeichnungs- und/oder Wiedergabevorrichtung für digitale Daten (520), wobei das Verfahren umfasst:

Empfangen (1302) eines Steuersignals aus einem Audio/Video-System über eine USB-Gerätesteuerung;
Decodieren (1304) digitaler Daten, die in einer Aufzeichnungs- und/oder Wiedergabevorrichtung für digitale Daten (520) gespeichert sind, entsprechend dem empfangenen Steuersignal, das einen Wiedergabebefehl enthält; und
Senden (1306) der decodierten digitalen Daten an das Audio/Video-System über die USB-Gerätesteuerung, wobei:
das Decodieren der digitalen Daten umfasst:

Decodieren der digitalen Daten in Einheiten, die durch das Audio/Video-System gemäß den Wiedergabebefehlen des Steuersignals bestimmt werden, das von dem Audio/VideoSystem gesendet wird, wobei die Einheiten bestimmt werden, indem Information über die digitalen Daten aus der Aufzeichnungs- und/oder Wiedergabevorrichtung an das Audio/Video-System übertragen wird,
das Senden der decodierten digitalen Daten umfasst: Senden der decodierten digitalen Daten, die in den bestimmten Einheiten decodiert sind, über einen Datenstromanschluss, der in der USB-Gerätesteuerung enthalten ist, gemäß den Wiedergabebefehlen des Steuersignals,
wobei das Empfangen des Steuersignals umfasst: Empfangen des Steuersignals über einen Schnittstellenanschluss, der in der USB-Gerätesteuerung enthalten ist, und
wobei die USB-Gerätesteuerung ferner einen Einstellanschluss zum Senden und Empfangen von Information aufweist, die zum Einstellen des Datenstromanschlusses und des Schnittstellenanschlusses erforderlich ist.

**15.** Verfahren nach Anspruch 14, das ferner umfasst: Senden der Information über die digitalen Daten, die zur Bestimmung einer Anzahl an bestimmten Einheiten verwendet wird, die zum Senden der decodierten digitalen Daten erforderlich ist, und eines Zeitintervalls des Sendens an das Audio/Video-System über den Datenstromanschluss und/oder den Schnittstellenanschluss.

**16.** Verfahren nach Anspruch 14 oder 15, wobei das Senden der decodierten digitalen Daten umfasst: Senden der decodierten digitalen Daten über eine isochrone Schnittstelle, die in der USB-Gerätesteuerung enthalten ist.

**17.** Verfahren nach Anspruch 16, wobei das Empfangen des Steuersignals umfasst: Empfangen des Steuersignals über eine Schnittstelle für unstrukturierte Datensätze, die in der USB-Gerätesteuerung enthalten ist, und
das Verfahren ferner umfasst: Senden eines Ergebnisses des Ausführens des Steuersignals über die Schnittstelle für unstrukturierte Datensätze.

**18.** Verfahren nach Anspruch 14, wobei das Senden der decodierten digitalen Daten ferner ein Verschlüsseln der decodierten digitalen Daten umfasst.

**19.** Verfahren nach Anspruch 14, das ferner umfasst:

Empfangen einer Eingabe in einem Gerät unter Anwendung eines Verfahrens; und
Steuern der USB-Gerätesteuerung derart, dass die Aufzeichnungs- und/oder Wiedergabevorrichtung für digitale Daten als ein tragbares Gerät arbeitet, wenn ein Befehl zur Verwendung der Vorrichtung als tragbares Gerät eingegeben wird.

**20.** Verfahren zur Wiedergabe digitaler Daten, die in einer Aufzeichnungs- und/oder Wiedergabevorrichtung für digitale Daten (520) gespeichert sind, über ein Audio/Video-System (510), wobei das Verfahren umfasst:

Senden (1602) eines Steuersignals an die Aufzeichnungs- und/oder Wiedergabevorrichtung für digitale Daten, um die wiederzugebenden digitalen Daten anzuweisen;

Empfangen (1608) decodierter digitaler Daten aus der Aufzeichnungs- und/oder Wiedergabevorrichtung für digitale Daten in Reaktion auf das Steuersignal; und

Umwandeln (1610) der decodierten digitalen Daten in analoge Daten und Ausgeben der analogen Daten, wobei eine Daten/Signal-Kommunikation mit der Aufzeichnungs- und/oder Wiedergabevorrichtung für digitale Daten über eine USB-Hoststeuerung (810) ausgeführt wird, wobei:

das Senden des Steuersignals umfasst:

Bestimmen (1506) von Einheiten der decodierten digitalen Daten auf der Grundlage einer Information über die digitalen Daten; und

Senden (1508), über einen Schnittstellenanschluss (1006, 1106), der in der USB-Hoststeuerung (810) enthalten ist, des Steuersignals, das die digitalen Daten anfordert, über die USB-Hoststeuerung,

das Empfangen der decodierten digitalen Daten umfasst:

Empfangen (1510) der decodierten digitalen Daten in den bestimmten Einheiten über einen Datenstromanschluss (1004, 1104), der in der USB-Hoststeuerung enthalten ist, und

die USB-Hoststeuerung ferner einen Einstellanschluss zum Senden und Empfangen von Information aufweist, die zur Einstellung des Datenstromanschlusses und des Schnittstellenanschlusses erforderlich ist.

21. Verfahren nach Anspruch 20, das ferner umfasst: Empfangen von Information über die digitalen Daten aus der Aufzeichnungs- und/oder Wiedergabevorrichtung für digitale Daten über den Datenstromanschluss (1004, 1104) und/oder den Schnittstellenanschluss (1006, 1106).

22. Verfahren nach Anspruch 20 oder 21, wobei beim Empfang der decodierten digitalen Daten die decodierten digitalen Daten über eine isochrone Schnittstelle, die in der USB-Hoststeuerung (810) enthalten ist, empfangen werden.

23. Verfahren nach Anspruch 22, wobei das Senden des Steuersignals umfasst: Senden des Steuersignals über eine Schnittstelle für unstrukturierte Datensätze, die in der USB-Hoststeuerung enthalten ist, und wobei das Verfahren ferner umfasst: Empfangen eines Ergebnisses des Ausführens des Steuersignals über die Schnittstelle für unstrukturierte Datensätze.

24. Computerlesbares Medium mit einem darin enthaltenen Computerprogramm zur Ausführung des Verfahrens zur Wiedergabe einer Multimediadatei nach einem Ansprüche 14 bis 19.

25. Computerlesbares Medium mit einem darin enthaltenen Computerprogramm zur Ausführung des Verfahrens nach einem der Ansprüche 20 bis 23.

**Revendications**

1. Appareil d'enregistrement et/ou de reproduction de données numériques (520), l'appareil comprenant:

une unité de stockage (620) pour stocker des données numériques codées dans un format prédéterminé;
une unité de décodeur (650) pour décoder des données numériques stockées dans l'unité de stockage;
une unité d'interface (630) comprenant un dispositif de commande de périphérique USB pour transmettre les données numériques décodées à un système audio/vidéo (510); et
une unité de commande (610) pour commander l'unité de stockage, l'unité de décodeur et l'unité d'interface, dans lesquelles:

l'unité de commande va commander à l'unité de décodeur de décoder les données numériques stockées en unités déterminées par le système audio/ vidéo en fonction d'un signal de commande demandant les données numériques stockées auprès du système audio/vidéo, les unités étant déterminées par transfert d'informations sur les données numériques depuis l'appareil d'enregistrement et/ou de reproduction de données numériques vers le système audio/vidéo, et
le dispositif de commande de périphérique USB comprend un terminal de diffusion en continu transmettant les données numériques décodées, alors décodées dans les unités déterminées, un terminal d'interface recevant le signal de commande demandant les données numériques stockées à partir du système audio/vidéo, et un terminal de configuration permettant de transmettre et de recevoir les informations nécessaires aux terminaux de diffusion en continu et d'interface.

**2.** Appareil selon la revendication 1, dans lequel le terminal d'interface reçoit le signal de commande du système audio/vidéo et transmet des informations sur les données numériques demandées par le système audio/vidéo.

**3.** Appareil selon les revendications 1 ou 2, dans lequel le dispositif de commande de périphérique USB comprend une interface isochrone pour la transmission des données numériques décodées en réponse au signal de commande du système audio/vidéo.

**4.** Appareil selon la revendication 3, dans lequel le dispositif de commande de périphérique USB comprend en outre une interface globale transmettant des informations de commande comprenant un résultat de l'exécution du signal de commande du système audio/vidéo.

**5.** Appareil selon les revendications 3 ou 4, dans lequel le dispositif de commande de périphérique USB reçoit un flux numérique du système audio/vidéo via l'interface isochrone, et l'unité de commande code le flux numérique reçu et stocke le flux numérique codé dans l'unité de stockage.

**6.** Appareil selon les revendications 1 à 5, dans lequel, si les données numériques comprennent des données cryptées, l'unité de commande décrypte les données cryptées, puis transmet les données décryptées au système audio/vidéo en utilisant un procédé de cryptage.

**7.** Appareil selon l'une des revendications 1 à 6, comprenant en outre une unité d'entrée recevant une entrée d'un dispositif utilisant un procédé, dans lequel si une commande d'utilisation d'un protocole USB conventionnel est saisie par le biais de l'unité d'entrée, l'unité de commande va commander le dispositif de commande de périphérique USB pour que l'appareil d'enregistrement et de reproduction de données numériques fonctionne selon le protocole USB conventionnel.

**8.** Appareil selon l'une des revendications 1 à 7, comprenant en outre une unité de conversion numérique/analogique convertissant les données numériques décodées en données analogiques.

**9.** Appareil selon la revendication 8, dans lequel l'unité de commande va commander la transmission des données numériques décodées de sorte que les données numériques décodées sont transmises de manière sélective à au moins l'une de l'unité de conversion numérique/analogique et de l'unité d'interface.

**10.** Système audio/vidéo (510) pour reproduire des données numériques, comprenant:

une unité d'interface (720) comprenant un dispositif de commande hôte USB (810) pour recevoir des données numériques décodées d'un appareil d'enregistrement et/ou de reproduction de données numériques (520);
une unité de conversion numérique/analogique (730) pour convertir les données numériques décodées reçues en données analogiques;
une unité de sortie pour sortir les données analogiques; et
une unité de commande (710) pour commander l'unité d'interface et l'unité de conversion numérique/analogique, dans lequel:

l'unité de commande détermine des unités des données numériques décodées sur la base d'informations sur les données numériques et, en fonction des unités déterminées des données numériques décodées, l'unité de commande transmet un signal de commande demandant les données numériques, par le biais du dispositif de commande hôte USB, et
le dispositif de commande hôte USB comprend un terminal de diffusion en continu (1004, 1104) pour recevoir les données numériques décodées dans les unités déterminées, un terminal d'interface (1006, 1106) transmettant le signal de commande à l'appareil d'enregistrement et/ou de reproduction de données numériques (520), et un terminal de configuration pour transmettre et recevoir les informations nécessaires au paramétrage des terminaux de diffusion en continu et d'interface.

**11.** Système selon la revendication 10, dans lequel le terminal de diffusion en continu (1004, 1104) comprend une interface isochrone recevant les données numériques décodées.

**12.** Système selon la revendication 11, dans lequel le terminal d'interface (1006, 1106) comprend en outre une interface en bloc recevant des informations de commande comprenant un résultat de l'exécution du signal de commande de l'appareil d'enregistrement et/ou de reproduction de données numériques (520).

**13.** Système selon les revendications 11 ou 12, dans lequel, par l'intermédiaire du terminal de diffusion en continu (1004, 1104), le dispositif de commande hôte USB (810) transmet un flux numérique à stocker dans l'appareil d'enregistrement et/ou de reproduction de données numériques (520).

**14.** Procédé de reproduction de données numériques dans un appareil d'enregistrement et/ou de reproduction de données numériques (520), le procédé comprenant:

recevoir (1302) un signal de commande d'un système audio/vidéo par le biais d'un dispositif de commande de périphérique USB;
décoder (1304) des données numériques stockées dans un appareil d'enregistrement et/ou de reproduction de données numériques (520) correspondant au signal de commande reçu, comprenant une commande de reproduction; et
transmettre (1306) les données numériques décodées au système audio/ vidéo par l'intermédiaire du dispositif de commande de périphérique USB, dans lequel:

le décodage des données numériques comprend le décodage des données numériques en unités déterminées par le système audio/vidéo conformément aux commandes de reproduction du signal de commande transmis par le système audio/vidéo, les unités étant déterminées par transfert d'informations sur les données numériques à partir du appareil d'enregistrement et/ou de reproduction de données numériques au système audio/vidéo,
la transmission des données numériques décodées comprend la transmission des données numériques décodées, alors décodées dans les unités déterminées par l'intermédiaire d'un terminal de diffusion en continu compris dans le dispositif de commande de dispositif USB conformément aux commandes de reproduction du signal de commande,
dans lequel la réception du signal de commande comprend la réception du signal de commande par le biais d'un terminal d'interface inclus dans le dispositif de commande de périphérique USB, et
dans lequel le dispositif de commande de périphérique USB comprend en outre un terminal de configuration pour transmettre et recevoir les informations nécessaires au paramétrage des terminaux de diffusion en continu et d'interface.

**15.** Procédé selon la revendication 14, comprenant en outre la transmission des informations sur les données numériques, utilisée pour déterminer un nombre d'unités déterminées nécessaires pour transmettre les données numériques décodées et un intervalle de temps de la transmission, vers le système audio / vidéo par le biais d'au moins une des options suivantes: le terminal de diffusion en continu et le terminal d'interface.

**16.** Procédé selon les revendications 14 ou 15, dans lequel la transmission des données numériques décodées comprend la transmission des données numériques décodées par le biais d'une interface isochrone incluse dans le dispositif de commande de périphérique USB.

**17.** Procédé selon la revendication 16, dans lequel la réception du signal de commande comprend la réception du signal de commande par le biais d'une interface en bloc incluse dans le dispositif de commande de périphérique USB, et le procédé comprend en outre la transmission d'un résultat d'exécution du signal de commande par le biais de l'interface en bloc.

**18.** Procédé selon la revendication 14, dans lequel la transmission des données numériques décodées comprend en outre le cryptage des données numériques décodées.

**19.** Procédé selon la revendication 14, comprenant en outre les étapes suivantes:

recevoir une entrée sur un périphérique utilisant le procédé; et
commander le dispositif de commande de périphérique USB de sorte que l'appareil d'enregistrement et de reproduction de données numériques fonctionne comme appareil portable si une commande d'utilisation de l'appareil comme appareil portable est saisie.

**20.** Procédé de reproduction de données numériques stockées sur un appareil d'enregistrement et/ou de reproduction de données numériques (520) par le biais d'un système audio/vidéo (510), le procédé comprenant les étapes suivantes:

transmettre (1602) un signal de commande à l'appareil d'enregistrement et/ou de reproduction de données numériques pour commander la reproduction des données numériques;
recevoir (1608) des données numériques décodées de l'appareil d'enregistrement et/ou de reproduction de données numériques en réponse au signal de commande; et
convertir (1610) les données numériques décodées en données analogiques et délivrer les données analogiques,
dans lequel la communication de données/de signaux avec l'appareil d'enregistrement et/ou de reproduction de données numériques est effectuée par le biais d'un dispositif de commande hôte USB (810), dans lequel:

la transmission du signal de commande comprend les étapes suivantes:

déterminer (1506) des unités des données numériques décodées sur la base d'informations sur les données numériques; et
transmettre (1508), par le biais d'un terminal d'interface (1006, 1106) inclus dans le dispositif de commande hôte USB (810), le signal de commande demandant les données numériques par le biais du dispositif de commande hôte USB,

la réception des données numériques décodées comprend: les étapes suivantes:
recevoir (1510) les données numériques décodées dans les unités déterminées par le biais d'un terminal de diffusion en continu (1004, 1104) inclus dans le dispositif de commande hôte USB, et
le dispositif de commande de périphérique USB comprend en outre un terminal de configuration pour transmettre et recevoir les informations nécessaires au paramétrage des terminaux de diffusion en continu et d'interface.

**21.** Procédé selon la revendication 20, comprenant en outre la réception d'informations sur les données numériques provenant de l'appareil d'enregistrement et/ou de reproduction de données numériques par le biais d'au moins l'un du terminal de diffusion en continu (1004, 1104) et du terminal d'interface (1006, 1106).

**22.** Procédé selon les revendications 20 ou 21, dans lequel lors de la réception des données numériques décodées, les données numériques décodées sont reçues par le biais d'une interface isochrone incluse dans le dispositif de commande hôte USB (810).

**23.** Procédé selon la revendication 22, dans lequel la transmission du signal de commande comprend la transmission du signal de commande par le biais d'une interface en bloc incluse dans le dispositif de commande de périphérique USB, et
le procédé comprend en outre la réception d'un résultat d'exécution du signal de commande par le biais de l'interface en bloc.

**24.** Support lisible par ordinateur sur lequel est incorporé un programme d'ordinateur pour exécuter le procédé de reproduction d'un fichier multimédia selon l'une des revendications 14 à 19.

**25.** Support lisible par ordinateur ayant incorporé un programme d'ordinateur pour exécuter le procédé selon l'une des revendications 20 à 23.

# FIG. 1 (RELATED ART)

## FIG. 2 (RELATED ART)

```
        ┌────────────────┐        ANALOGUE          ┌──────────────┐
   210  │  NON-PORTABLE  │◄──── VOICE SIGNAL ───────│   PORTABLE   │  220
        │     DEVICE     │                          │    DEVICE    │
        └────────────────┘                          └──────────────┘
```

## FIG. 3 (RELATED ART)

```
     ┌────────────────┐         ┌────────────┐         ┌──────────────┐
 210 │  NON-PORTABLE  │◄──────► │  CONTROL   │◄──────► │   PORTABLE   │ 220
     │     DEVICE     │         │    BOX     │         │    DEVICE    │
     └────────────────┘         └────────────┘         └──────────────┘
           300
```

## FIG. 4 (RELATED ART)

```
     ┌────────────┐                           ┌──────────────┐
 410 │  PORTABLE  │═════════════════════════► │   CAR A/V    │ 420
     │   DEVICE   │        ANALOGUE           │    SYSTEM    │
     └────────────┘         OUTPUT            └──────────────┘
```

# FIG. 5

510

A/V
SYSTEM

CONTROL SIGNAL
AND DIGITAL STREAM

520

DIGITAL DATA RECORDING
/REPRODUCING DEVICE

# FIG. 6

620

STORAGE
UNIT

630

INTERFACE
UNIT

610

CONTROL
UNIT

640

D/A
CONVERSION
UNIT

A/V
SYSTEM

A/V
OUTPUT

650

DECODER
UNIT

# FIG. 7

720       710       730

DIGITAL DATA
RECORDING
/REPRODUCING
DEVICE ← | INTERFACE UNIT | ↔ | CONTROL UNIT | ↔ | D/A CONVERSION UNIT | → A/V OUTPUT

# FIG. 8

510

**A/V SYSTEM**

810

USB
HOST
CONTROLLER

400

USB CABLE

520

**DIGITAL DATA RECORDING
/REPRODUCING DEVICE**

820

USB
DEVICE
CONTROLLER

# FIG. 9

EP 2 629 191 B1

A/V SYSTEM

DIGITAL DATA RECORDING/REPRODUCING DEVICE

913 INPUT UNIT

901 MCU

910 STORAGE DEVICE

951 STORAGE DEVICE

953 MCU

911 DSP (CODEC)

903 RAM

810 USB HOST

820 USB DEVICE

957 RAM

955 DSP (CODEC)

909 VOICE OUTPUT UNIT

907 VIDEO OUTPUT UNIT

959 AUDIO OUTPUT UNIT

510

520

A/V OUTPUT

A/V OUTPUT

# FIG. 10

# FIG. 11

# FIG. 12

A/V SYSTEM — 510

- MCU — 1201
- DECODER UNIT — 1209
- RAM — 1202
- DAC — 1203

USB HOST CONTROLLER — 810
- SETUP TERMINAL
- STREAMING TERMINAL
- INTERFACE TERMINAL

A/V OUTPUT

CONTROL

BULK INPUT

BULK OUTPUT

BULK INPUT

BULK OUTPUT

DIGITAL DATA RECORDING/REPRODUCING DEVICE — 520

USB DEVICE CONTROLLER — 820
- SETUP TERMINAL
- STREAMING TERMINAL
- INTERFACE TERMINAL

- STORAGE UNIT — 1204
- MCU — 1205
- RAM — 1206
- DECODER UNIT — 1208
- DAC — 1207

A/V OUTPUT

EP 2 629 191 B1

# FIG. 13

START

↓

RECEIVE CONTROL SIGNAL
FROM A/V SYSTEM ——1302

↓

DECODE REQUESTED
MULTIMEDIA FILE ——1304

↓

TRANSMIT DECODED
DATA TO A/V SYSTEM ——1306

↓

STOP

# FIG. 14

START

INITIALIZE USB DEVICE CONTROLLER —— 1402

CONNECT USB CABLE —— 1404

DETECT LOGIC HIGH OF VBUS HW
SIGNAL OF USB DEVICE CONTROLLER —— 1406

INPUT DEVICE USING METHOD —— 1408

1410
OPERATE
AS DEVICE UNIQUE TO PRESENT
INVENTION?

YES — NO

ACTIVATE VBUS INTERRUPT —— 1412    ACTIVATE VBUS INTERRUPT —— 1422

DETECT VBUS INTERRUPT —— 1414    DETECT VBUS INTERRUPT —— 1424

TRANSMIT DESCRIPTOR FOR
RECOGNITION OF DEVICE
UNIQUE TO PRESENT INVENTION —— 1416    TRANSMIT FOR MASS STORAGE
CLASS DEVICE DESCRIPTOR —— 1426

COMPLETE DEVICE RECOGNITION —— 1418    COMPLETE DEVICE RECOGNITION —— 1428

OPERATE AS DEVICE UNIQUE
TO PRESENT INVENTION —— 1420    OPERATE AS
MASS STORAGE CLASS —— 1430

# FIG. 15

```
                    ┌─────────┐
                    │  START  │
                    └────┬────┘
                         ↓
        ┌────────────────────────────────────┐
        │  TRANSMIT REPRODUCTION START COMMAND│──── 1502
        └────────────────┬───────────────────┘
                         ↓
        ┌────────────────────────────────────┐
        │        REQUEST INFORMATION ON       │──── 1504
        │    MULTIMEDIA FILE TO BE REPRODUCED │
        └────────────────┬───────────────────┘
                         ↓
        ┌────────────────────────────────────┐
        │   DETERMINE NUMBER OF UNITS OF DATA │
        │ RECEPTION AND TIME INTERVAL BY      │──── 1506
        │ REFERRING TO INFORMATION ON         │
        │ MULTIMEDIA FILE                     │
        └────────────────┬───────────────────┘
                         ↓
        ┌────────────────────────────────────┐
        │      TRANSMIT DATA REQUEST SIGNAL   │──── 1508
        │   ACCORDING TO DETERMINED TIME INTERVAL│
        └────────────────┬───────────────────┘
                         ↓
        ┌────────────────────────────────────┐
        │     RECEIVE DATA OF RECEPTION UNIT SIZE│──── 1510
        └────────────────┬───────────────────┘
                         ↓
                  ◇ IS THE NUMBER
            OF RECPETIONS THE SAME AS
     NO   PREDETERMINED NUMBER OF UNITS OF ◇──── 1512
            DATA RECEPTION?
                         │ YES
                         ↓
        ┌────────────────────────────────────┐
        │  CONVERT RECEIVED DATA INTO ANALOGUE│──── 1514
        │  SIGNAL AND OUTPUT ANALOGUE SIGNAL  │
        └────────────────┬───────────────────┘
                         ↓
                    ┌─────────┐
                    │  STOP   │
                    └─────────┘
```

# FIG. 16

START

TRANSMIT REPRODUCTION COMMAND — 1602

REQUEST REPRODUCTION STATE INFORMATION — 1604

RECEIVE AND DISPLAY REPRODUCTION STATE INFORMATION — 1606

RECEIVE STREAMING DATA — 1608

CONVERT STREAMING DATA INTO ANALOG SIGNAL AND REPRODUCE ANALOGUE SIGNAL — 1610

STOP

# FIG. 17

START

TRANSMIT OPERATION COMMAND — 1702

RECEIVE INFORMATION ON STATE AFTER EXECUTING OPERATION COMMAND — 1704

DISPLAY STATE INFORMATION — 1706

STOP

# FIG. 18

```
  1810                          1820                          1830
┌──────────┐  ╱‾‾‾‾‾‾╲  ┌──────────┐  ╱‾‾‾‾‾‾╲  ┌──────────┐
│          │ ╱   1ST    ╲ │          │ ╱   2ND    ╲ │          │
│ PORTABLE │ │ CONNECTION │ │ INTERFACE │ │ CONNECTION │ │   A/V    │
│  DEVICE  │ │   UNIT     │ │ APPARATUS │ │   UNIT     │ │  SYSTEM  │
│          │ ╲          ╱ │          │ ╲          ╱ │          │
└──────────┘  ╲_____╱  └──────────┘  ╲_____╱  └──────────┘
```

# FIG. 19

```
                              CD CHANGER
                                  ↑
              1910          ┌─────────┐──1950
                            │▨▨▨▨▨▨▨│
         ┌──────────────────┴─────────┴──────────────────┐
         │                                                │
  1920   │                 INTERFACE                 ┌──┐ ┌──┐      CAR A/V
         │                 PROCESSING                │▨▨│ │▨▨│ →    SYSTEM
PORTABLE ┌──┐               UNIT                     │▨▨│ │▨▨│
DEVICE ← │▨▨│                                        └──┘ └──┘
         └──┘                                         1930  1940
         │                                                │
         └────────────────────────────────────────────────┘
```

# FIG. 20

2001

2002

| | |
|---|---|
| 1 | REQH |
| 2 | GND |
| 3 | BU+14 |
| 4 | CH CON |
| 5 | CH MUTE |
| 6 | A GND |
| 7 | CH RST |
| 8 | R ch |
| 9 | REQH |
| 10 | DATAC |
| 11 | DATAH |
| 12 | L ch |
| 13 | CH CLK |

# FIG. 21

2003

2004

| | |
|---|---|
| 1 | C-BUS DATA |
| 2 | C-BUS CLOCK |
| 3 | |
| 4 | C-BUS SERVICE REQUEST |
| 5 | |
| 6 | Signal GND |
| 7 | CD L-ch input |
| 8 | CD R-ch input |
| 9 | |
| 10 | BACK UP |
| 11 | REMOTE CONTROL |
| 12 | GND |
| 13 | |

## FIG. 22

# FIG. 23

```
        ┌─────────────┐
        │    START    │
        └──────┬──────┘
               │
               ▼
┌──────────────────────────────┐
│      CONVERT SIGNAL FORMAT OF │
│   A/V SYSTEM INTO SIGNAL FORMAT OF  ├── 2302
│  PORTABLE DEVICE AND OUTPUT SIGNAL  │
└──────────────┬───────────────┘
               │
               ▼
┌──────────────────────────────┐
│  CONVERT SIGNAL FORMAT OF PORTABLE │
│     DEVICE INTO SIGNAL FORMAT OF    ├── 2304
│    A/V SYSTEM AND OUTPUT SIGNAL     │
└──────────────┬───────────────┘
               │
               ▼
        ┌─────────────┐
        │    STOP     │
        └─────────────┘
```

# FIG. 24

```
┌──────────┐         ┌──────────────────┐         ┌──────────────────┐
│   A/V    │         │ INTERFACE APPARATUS│        │ PORTABLE DEVICE  │
│  SYSTEM  │         │   (USB HOST)      │         │  (USB DEVICE)    │
└──────────┘         └──────────────────┘         └──────────────────┘
```

2402 — ( CONNECT X-BUS )

( CONNECT USB CABLE ) — 2404

2410                 2408

┌──────────┐    ┌──────────┐         ◇ WHICH DEVICE IS USED? ◇ — 2406
│ OPERATE  │ ◄─ │ CONNECT  │ ◄────
│CD CHANGER│    │ X-BUS TO │
│          │    │CD CHANGER│
└──────────┘    └──────────┘

PORTABLE DEVICE

2412

◇ IS USB CONTROL INTERFACE SUPPORTED? ◇ ── NO

YES

┌──────────────────┐              ┌──────────────────────┐
│    PERFORM       │              │ PERFORM ENUMERATION  │
2414 │ ENUMERATION      │         │  PROCEDURE FOR       │ 2420
│ PROCEDURE TO     │              │  MASS STORAGE        │
│ FORM INTERFACE   │              │     CLASS            │
└──────────────────┘              └──────────────────────┘

┌──────────────────┐              ┌──────────────────────┐
2416 │    EXCHANGE      │         │   OPERATE AS         │
│   CAPABILITY     │              │  PORTABLE DISC       │
└──────────────────┘              └──────────────────────┘

                                          2422

┌──────────────────┐
│  AUTHENTICATE    │
│    THROUGH       │
2418 │ EXCHANGE OF      │
│ DEVICE INFORMATION│
└──────────────────┘

( A )

# FIG. 25

| A/V SYSTEM | INTERFACE APPARATUS (USB HOST) | PORTABLE DEVICE (USB DEVICE) |
|---|---|---|

2502

**TRANSMIT REPRODUCTION COMMAND**

Ⓐ

2504

**REQUEST REPRODUCTION AND REPRODUCTION INFORMATION**

2506

**PERFORM REPRODUCTION**

2508

**TRANSMIT REPRODUCTION INFORMATION**

2510

**CONVERT REPRODUCTION INFORMATION INTO SERIAL DATA FOR X-BUS**

2514

**RECEIVE AND DISPLAY REPRODUCTION INFORMATION**

2512

**PERFORM STREAMING**

2516

**DAC OUTPUT**

2518

**CONVERT INTO SERIAL DATA FOR X-BUS AND TRANSMIT DATA**

2520

**OUTPUT THROUGH AMP**

# FIG. 26 (RELATED ART)

2601

2603

2605

STORAGE
DEVICE

MCU

USB
DEVICE

RAM

DSP
(CODEC)

2617

2607

2609

VOICE
OUTPUT
UNIT

IMAGE
OUTPUT
UNIT

2613

2611

2615

A/V OUTPUT

# FIG. 27 (RELATED ART)

PC

2723 — CPU

2721 — STORAGE DEVICE

2724 — USB HOST

2717 — USB DEVICE

2703 — STORAGE DEVICE

2705 — MCU

2707 — RAM

2709 — DSP (CODEC)

2713 — AUDIO OUTPUT UNIT

2711 — IMAGE OUTPUT UNIT

2715 — A/V OUTPUT

# FIG. 28A (RELATED ART)

AN MP3 SONG
STORED IN
STORAGE DEVICE

| | |
|---|---|
| 0x12345678 | — 512 BYTE |
| | — 512 BYTE |
| . . . | |
| | — 512 BYTE |

# FIG. 28B (RELATED ART)

AN MP3 SONG
ENCRYPTED AND
THEN STORED IN
STORAGE DEVICE

| |
|---|
| 0x95511559 |
| |
| . . . |
| |

## FIG. 29 (RELATED ART)

# FIG. 30 (RELATED ART)

EP 2 629 191 B1

# FIG. 31 (RELATED ART)

# FIG. 32

CONTROL SIGNAL

DIGITAL STREAM
(IMAGE, VOICE)

EP 2 629 191 B1

# FIG. 33

EP 2 629 191 B1

# FIG. 34

3251
STORAGE DEVICE

3253
MCU

3255
REPRODUCTION UNIT (CODEC)

3257 — RAM

3261
USB DEVICE

3259
AUDIO OUTPUT UNIT

# FIG. 35

EP 2 629 191 B1

# FIG. 36

| Transaction | H/S | | ADDR | ENDP | T | Data | | NYET | Time | Time Stamp |
|---|---|---|---|---|---|---|---|---|---|---|
| 96 | H/S | OUT 0x87 | 1 | 2 | 0 | 48 00 0A 00 02 00 02 00 00 00 | | 0x69 | 1.079ms | 00022.7262 1850 |
| 238 | H/S | IN 0x96 | 1 | 1 | 0 | 00 00 01 5C 00 06 00 01 00 01 00 05 00 0B 00 01 00 00 00 00 | ACK 0x4B | | | |
| 239 | H/S | PING 0x2D | 1 | 2 | | ACK 0x4B | Time 7.200µs | Time Stamp 00022.72721749 | | |
| 240 | H/S | OUT 0x87 | 1 | 2 | 0 | 48 00 0A 00 02 00 07 00 00 00 | | NYET 0x69 | 11.902 ms | 00022.7272 2181 |
| 1926 | H/S | IN 0x96 | 1 | 1 | 1 | Data 96 bytes | ACK 0x4B | Time 5.295 ms | Time Stamp 00022.7272 2181 | |
| 1927 | H/S | OUT 0x87 | 1 | 4 | 0 | Data 00 | NYET 0x69 | Time 150.867µs | Time Stamp 00022.74096512 | |
| 1928 | H/S | IN 0x96 | 1 | 3 | 0 | Data 512 bytes | ACK 0x4B | Time 125.633µs | Time Stamp 00022.74110564 | |
| 1929 | H/S | IN 0x96 | 1 | 3 | 1 | Data 512 bytes | ACK 0x4B | Time 118.817µs | Time Stamp 00022.74120602 | |
| 1930 | H/S | IN 0x96 | 1 | 3 | 1 | Data 512 bytes | ACK 0x4B | Time 126.667µs | Time Stamp 00022.74130231 | |
| 1931 | H/S | IN 0x96 | 1 | 3 | 1 | Data 512 bytes | ACK 0x4B | Time 128.100µs | Time Stamp 00022.74140331 | |
| 1932 | H/S | IN 0x96 | 1 | 3 | 1 | Data 512 bytes | ACK 0x4B | Time 126.800µs | Time Stamp 00022.74150517 | |
| 1933 | H/S | IN 0x96 | 1 | 3 | 1 | Data 512 bytes | ACK 0x4B | Time 117.133µs | Time Stamp 00022.74160625 | |
| 1934 | H/S | IN 0x96 | 1 | 3 | 1 | Data 512 bytes | ACK 0x4B | Time 128.367µs | Time Stamp 00022.74170153 | |
| 1935 | H/S | IN 0x96 | 1 | 3 | 1 | Data 512 bytes | ACK 0x4B | Time 126.467µs | Time Stamp 00022.74180355 | |
| 1936 | H/S | IN 0x96 | 1 | 3 | 1 | Data 512 bytes | ACK 0x4B | Time 14.449 µs | Time Stamp 00022.74190443 | |

3602

3604

EP 2 629 191 B1

**EP 2 629 191 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003153993 A1